(19)

**Europäisches Patentamt**
**European Patent Office**
**Office européen des brevets**

(11) **EP 3 923 147 B1**

(12) **EUROPEAN PATENT SPECIFICATION**

(45) Date of publication and mention of the grant of the patent:
**27.11.2024 Bulletin 2024/48**

(21) Application number: **20752171.7**

(22) Date of filing: **31.01.2020**

(51) International Patent Classification (IPC):
**H04L 51/04** *(2022.01)*    **H04L 51/214** *(2022.01)*
**H04L 12/18** *(2006.01)*

(52) Cooperative Patent Classification (CPC):
**H04L 12/1818; H04L 51/04; H04L 51/214;**
H04L 12/1827

(86) International application number:
**PCT/JP2020/003718**

(87) International publication number:
**WO 2020/162364 (13.08.2020 Gazette 2020/33)**

(54) **RELAY POINT ALLOCATION SERVER, CHAT SYSTEM, CLIENT TERMINAL, CHAT SERVER, AND CHAT SPACE CONSTRUCTION METHOD**

RELAISPUNKTZUWEISUNGSSERVER, CHATSYSTEM, CLIENT-ENDGERÄT, CHATSERVER UND CHATRAUMBAUVERFAHREN

SERVEUR D'ATTRIBUTION DE POINT DE RELAIS, SYSTÈME DE CONVERSATION EN LIGNE, TERMINAL CLIENT, SERVEUR DE CONVERSATION EN LIGNE ET PROCÉDÉ DE CONSTRUCTION D'ESPACE DE CONVERSATION EN LIGNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.02.2019 JP 2019020859**

(43) Date of publication of application:
**15.12.2021 Bulletin 2021/50**

(73) Proprietor: **Sony Interactive Entertainment Inc. Tokyo 108-0075 (JP)**

(72) Inventors:
• **ONOUE, Yoshihisa**
  **Tokyo 108-0075 (JP)**

• **OSHITA, Makoto**
  **Tokyo 108-0075 (JP)**
• **URAKAWA, Soushi**
  **Tokyo 108-0075 (JP)**

(74) Representative: **Müller Hoffmann & Partner Patentanwälte mbB**
  **St.-Martin-Straße 58**
  **81541 München (DE)**

(56) References cited:
  **JP-A- 2002 291 017    JP-A- 2003 022 226**
  **US-A1- 2004 210 636    US-A1- 2007 282 963**
  **US-A1- 2010 199 340    US-A1- 2017 250 861**

## Description

[Technical Field]

The present invention relates to a chat system in which a plurality of users have conversations with each other via a network, a relay point allocation server, a client terminal, and a chat server that are included in the chat system, and a chat space construction method that is carried out in the chat system.

[Background Art]

The development of information processing technology and the enhancement of networks in recent years make it possible for the users of devices including personal computers and mobile terminals to enjoy various pieces of content with ease, regardless of the capabilities of the devices operated by the users and the environments in which the devices are used. For example, there has been a growing number of content that not only allows users to individually receive and enjoy data sent from content providing servers, but also enables distant users to enjoy them together while communicating with each other. There has been known a chat system as means by which users talk to each other through characters, sounds, and video images via a network (see, for example, PTL 1).

[Citation List]

[Patent Literature]

[PTL 1]
JP 5534469B

US 2010/ 199340 A1 teaches an instant messaging application, wherein a system providing same uses, for streaming of data, a server or not, dependent on available bandwidth and connection speed.

US 2017/ 250861 A1 relates to techniques to provide relay server configuration for geographically disparate client devices.

[Summary]

[Technical Problems]

In order for users of a chat system to realize talks as natural as talks in person, it is desirable that words let go from users reach other users instantly. Particularly, in conversations about pieces of content that are performed concurrently, such as Internet games, or distributed moving images, delays in the arrival of talks at users can be highly stressful for the users. However, as more efforts are made to cope with various situations including the types of terminals that are used by individual users, network environments, the number of users who join chats, etc., a dilemma tends to arise because more time is required to communicate with users.

The present invention has been made in view of the above problems. It is an object of the present invention to provide a chat environment that is likely to cause less delays stably.

[Solution to Problem]

The above problems are solved by the subject-matter of each of the independent claims.

An aspect of the present invention relates to a relay point allocation server. The relay point allocation server, in a chat system in which a plurality of members that each have been joining a chat space have conversations with each other via a network using client terminals, includes a communication section acquiring an opening request to open the chat space from any one of the client terminals, and a chat server selecting section requesting a chat server selected on the basis of predetermined rules from a plurality of chat servers disposed in a distributed fashion and relaying statement data transmitted among the client terminals in response to the opening request, to relay statement data in the chat space corresponding to the opening request.

Another aspect of the present invention relates to a chat system. The chat system, in which a plurality of members that each have been joining a chat space have conversations with each other via a network, includes a plurality of client terminals outputting statement data of members to the network, acquiring statement data from other members from the network, and outputting the acquired statement data to an output device, a plurality of chat servers disposed in a distributed fashion and relaying the statement data transmitted among the client terminals, and a relay point allocation server responsive to an opening request to open the chat space from any one of the client terminals, requesting a chat server selected on the basis of predetermined rules from the plurality of chat servers to relay statement data in the chat space corresponding to the opening request.

Still another aspect of the present invention relates to a client terminal. The client terminal, for use in a chat system in which a plurality of members that each have been joining a chat space have conversations with each other via a network, includes an input information acquiring section for acquiring statements of the members that are using client terminals, a communication section for sending and receiving statement data by establishing communication with a chat server selected on the basis of predetermined rules from a plurality of chat servers relaying statement transmitted data among the client terminals, and an output section successively outputting the statement data of the members in a predetermined format to an output device, in which the communication section is responsive to a chat opening request acquired by the input information acquiring section, issues an opening request to open a chat space to a relay point allocation server selecting the chat server, and establishes communication with the selected chat server on the basis of information sent from the relay point allocation server as a result of the opening request.

A further aspect of the present invention relates to a chat server. The chat server, for relaying statement data transmitted between client terminals, among a plurality of chat servers disposed in a distributed fashion in a chat system in which a plurality of members that each have been joining a chat space have conversations with each other via a network using client terminals, includes a chat space opening section opening a chat space in response to a request from a relay point allocation server selecting a chat server on the basis of predetermined rules in response to an opening request to open the chat space that is issued by any one of the client terminals, and a chat processing section accepting a request to join the chat space that is issued from each of the client terminals, and establishing direct communication with the client terminals that have satisfied predetermined conditions, thereby relaying the statement data.

A still further aspect of the present invention relates to a chat space construction method. The chat space construction method, in a chat system in which a plurality of members that each have been joining a chat space have conversations with each other via a network using client terminals, includes a step of issuing an opening request to open the chat space from any one of the client terminals, a step of requesting, from a relay point allocation server, a chat server selected on the basis of predetermined rules from a plurality of chat servers disposed in a distributed fashion and relaying statement data transmitted among the client terminals in response to the opening request, to relay statement data in the chat space corresponding to the opening request, and a step of opening the chat space by the selected chat server and establishing direct communication with the client terminals, thereby relaying the statement data.

Note that any combinations of the above components and expressions of the present invention as converted into methods, apparatus, systems, and computer programs are also effective as aspects of the present invention.

[Advantageous Effect of the Invention]

According to the present invention, there are provided at all times preferable forms of information processing depending on situational changes.

[Brief Description of Drawings]

[FIG. 1]

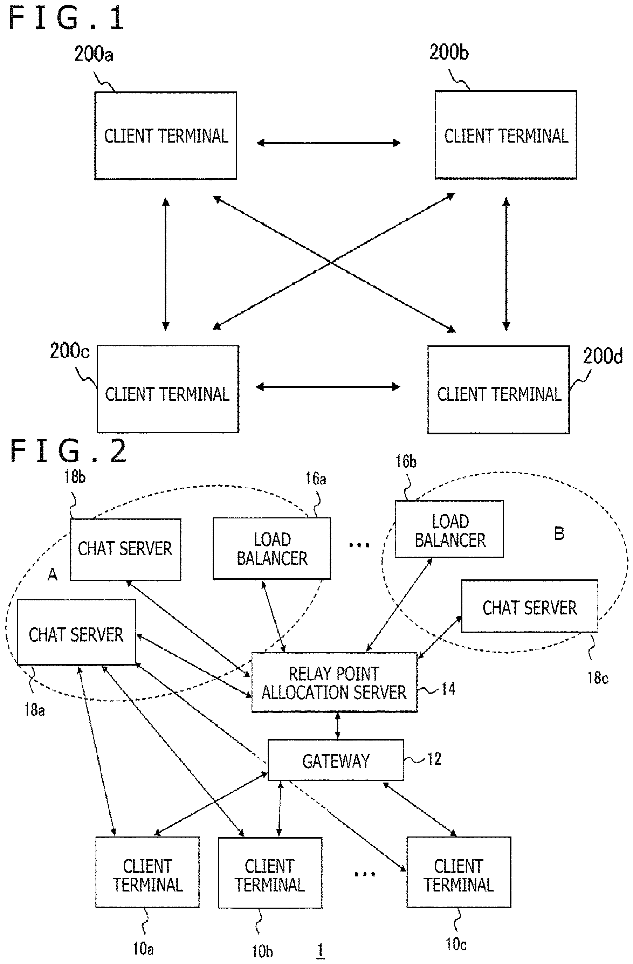

FIG. 1 is a diagram illustrating a configuration of a general chat system.
[FIG. 2]
FIG. 2 is a diagram illustrating a configuration of a chat system according to an embodiment of the present invention.
[FIG. 3]

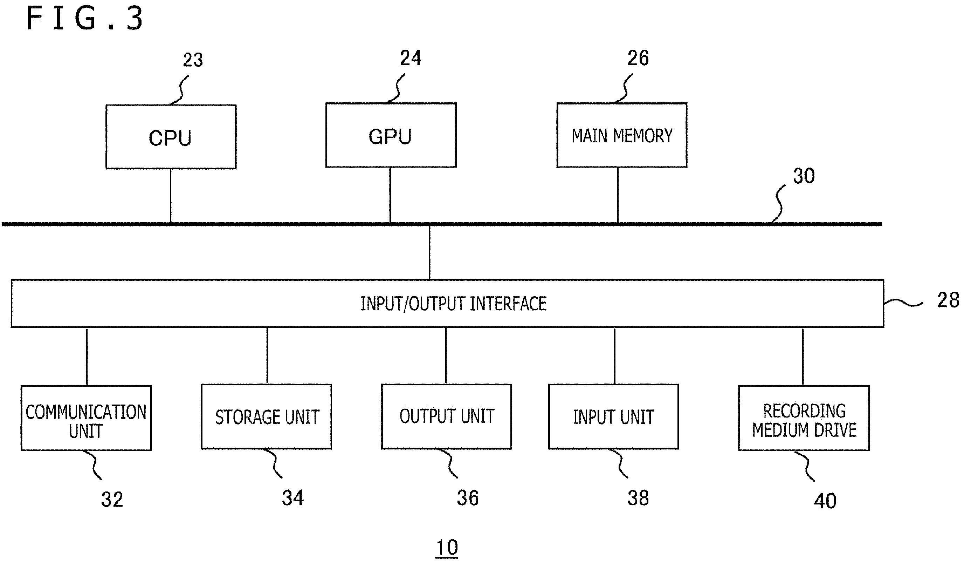

FIG. 3 is a diagram illustrating the internal circuit configuration of a client terminal according to the embodiment.
[FIG. 4]

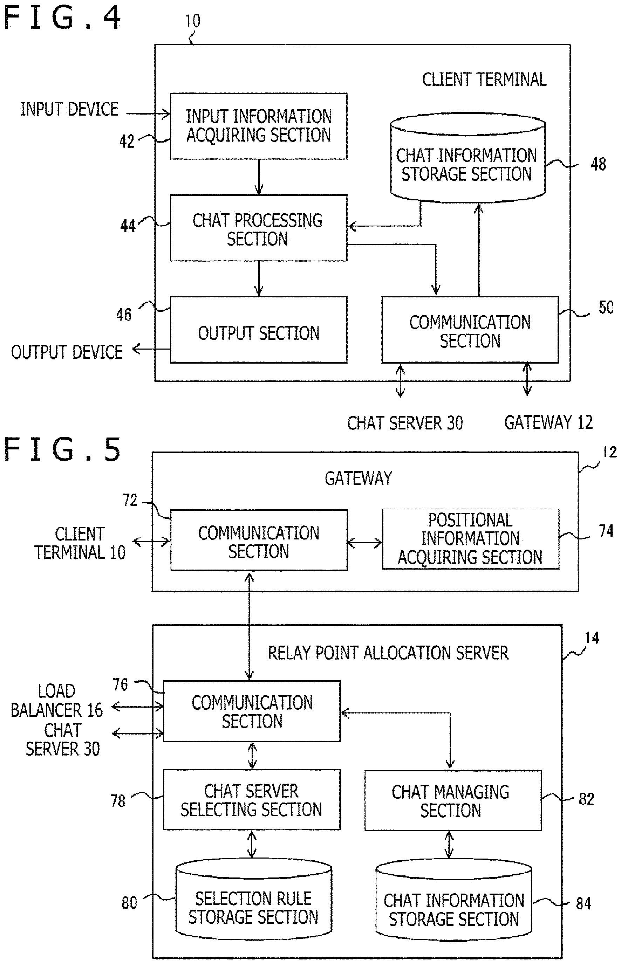

FIG. 4 is a diagram illustrating a configuration of functional blocks of the client terminal according to the embodiment.
[FIG. 5]
FIG. 5 is a diagram illustrating a configuration of functional blocks of a gateway and a relay point allocation server according to the embodiment.
[FIG. 6]

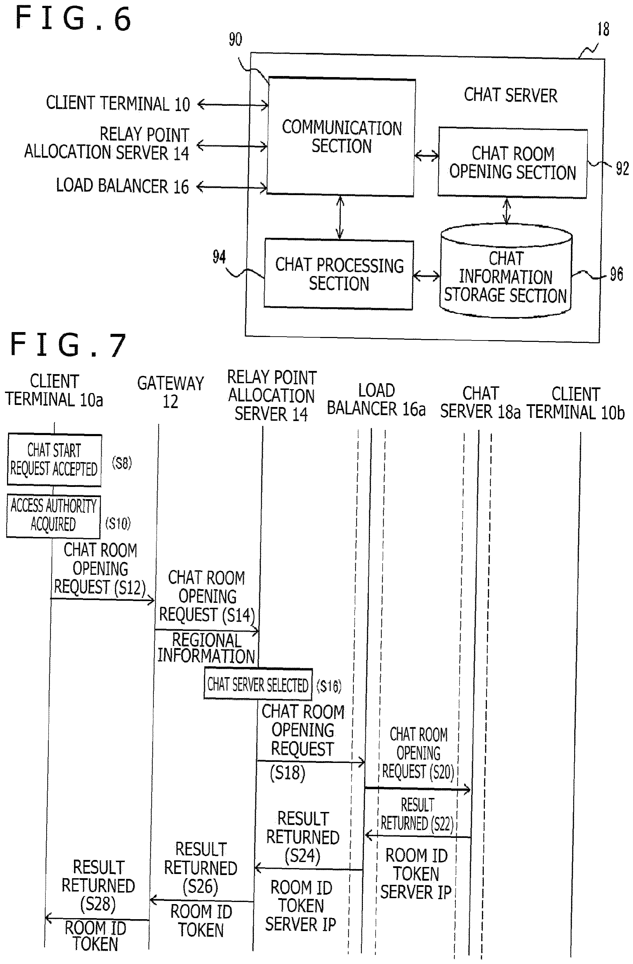

FIG. 6 is a diagram illustrating a configuration of functional blocks of a chat server according to the embodiment.
[FIG. 7]
FIG. 7 is a timing chart illustrating a processing sequence for opening a chat room according to the embodiment.
[FIG. 8]

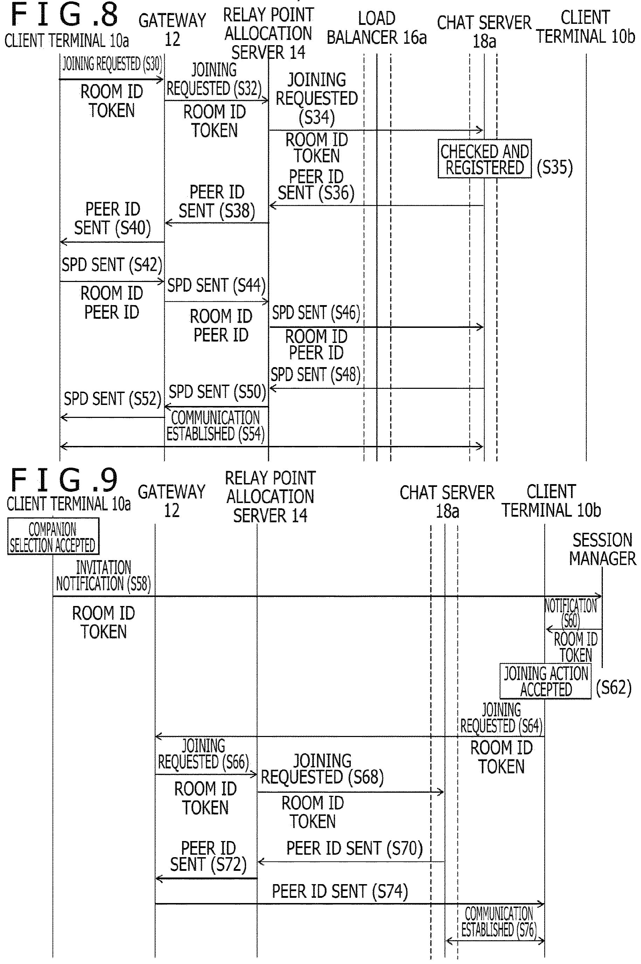

FIG. 8 is a timing chart illustrating a processing sequence for joining the open chat room according to the embodiment.
[FIG. 9]
FIG. 9 is a timing chart illustrating the processing sequence for joining the open chat room according to the embodiment.
[FIG. 10]

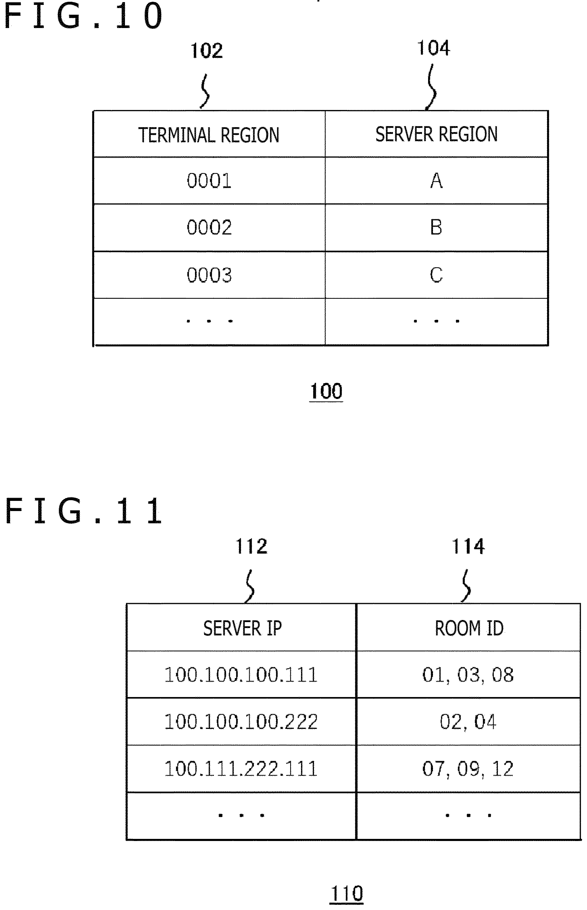

FIG. 10 is a diagram illustrating a structural example of data stored in a selection rule storage section of the relay point allocation server according to the embodiment.
[FIG. 11]
FIG. 11 is a diagram illustrating a structural example of data stored in a chat information storage section of the relay point allocation server according to the embodiment.
[FIG. 12]

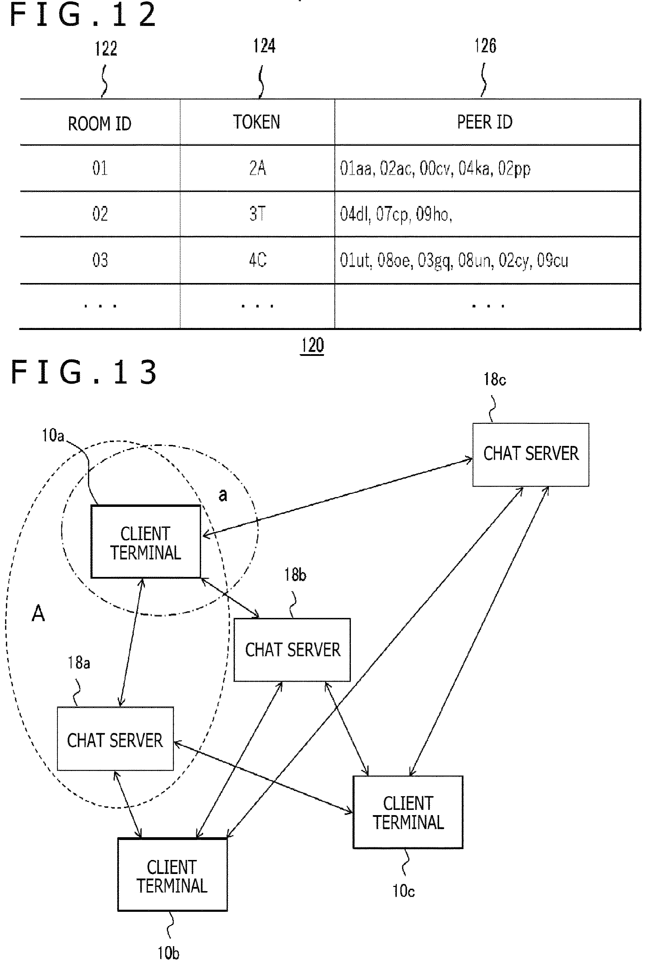

FIG. 12 is a diagram illustrating a structural example of data stored in a chat information storage section of a chat server according to the embodiment.
[FIG. 13]
FIG. 13 is a diagram that is illustrative of a policy for the relay point allocation server according to the embodiment to select a chat server for opening a chat room or a region thereof.
[FIG. 14]

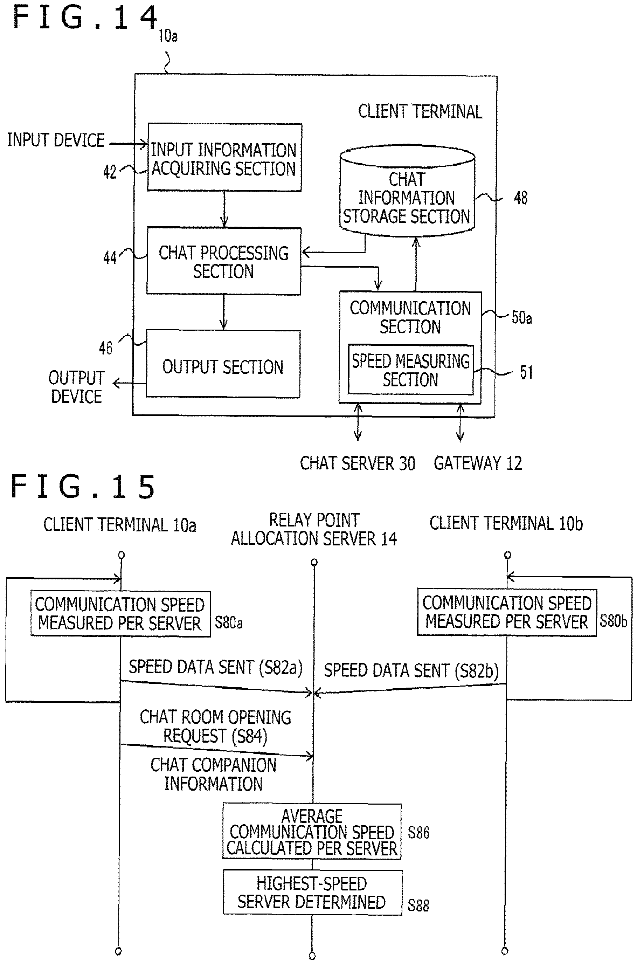

FIG. 14 is a diagram illustrating a configuration of functional blocks of a client terminal in a mode for selecting a chat server on the basis of measured values of communication speeds according to the embodiment.
[FIG. 15]
FIG. 15 is a flowchart of a processing sequence for selecting a chat server on the basis of average values of communication speeds with a plurality of client terminals according to the embodiment.

[Description of Embodiment]

First, a conventional general chat technology will be described below for highlighting the significance of an embodiment of the present invention. According to the present embodiment, it is assumed that users have conversations through sounds or video images accompanied by sounds via a network. However, users may have conversations through characters or a combination of two or more of characters, sounds, and video images. Data representing contents of conversations to be sent to a companion's terminal in a chat, irrespective of the kind of the data, will hereinafter be referred to as "statement data."

FIG. 1 illustrates a configuration of a general chat system. Chat participants talk to other participants through respective client terminals 200a, 200b, 200c, and 200d. For example, when a participant who uses the client terminal 200a, for example, makes a statement, the client terminal 200a encodes the statement data, and sends the encoded statement data to the client terminals 200b, 200c, and 200d of the other participants via a network such as the Internet.

In detail, the statement data are transmitted from a local network to which the client terminal 200a belongs via the Internet to respective local networks to which the client terminals 200b, 200c, and 200d belong as destinations. For data transmission between different networks, it is necessary to perform IP (Internet Protocol) address translation according to NAT (Network Address Translation), protocol conversion, and the like. As illustrated in the figure, a system in which client terminals establish communication with each other for directly exchanging data therebetween is referred to as a peer-to-peer networking system.

According to this system, statement data can be directly transmitted to the other party. Therefore, in general, the system is advantageous in that a delay time taken until the statement reaches the other party is short. On the other hand, since each client terminal needs to secure as many communication routes as the number of chat companions, the larger the number of people joining a chat is, the larger the consumption of resources is in the client terminals and the networks to which the client terminals belong. Consequently, in applications in which the users talk to each other while separately processing a piece of content such as a game or a moving image, for example, changes in the number of participants may adversely affect the responsiveness of the content themselves.

Moreover, some combinations of translation or conversion mechanisms such as NAT, in network interfaces on transmission routes may take time in establishing communication or may make communication difficult to be achieved. Further, direct communication tends to cause security problems. According to the present embodiment, these problems are overcome by providing chat servers that relay statement data. Specifically, a plurality of chat servers are located in different regions, and an appropriate one of the chat servers is selected depending on the positional information of client terminals, thereby realizing a chat system that is stable and involves shorter delay times.

FIG. 2 illustrates a configuration of a chat system according to the present embodiment. The chat system 1 includes client terminals 10a, 10b, 10c, ··· (hereinafter referred to collectively as client terminals 10), chat servers 18a, 18b, 18c, ··· (hereinafter referred to collectively as chat servers 18), a gateway 12, a relay point allocation server 14, and load balancers 16a, 16b, ··· (hereinafter referred to collectively as load balancers 16).

The client terminals 10 refer to devices operated by respective users to at least input and output data regarding a chat. In addition, the client terminals 10 may process various types of content such as games and moving images by themselves, receive data distributed from a content providing server, and output images and sounds as a result of the processed content and received data. The client terminals 10 may be any of general devices and terminals including tablets, mobile phones, portable terminals, and personal computers.

The chat servers 18 creates a chat space in which a group of users who operate the client terminals 10a, 10b, 10c, ··· have conversations. The chat space is actually a unit of data or a storage area therefor that is given individual identification information, and to which chat participants or their respective client terminals 10 are related. Hereinafter, an individual space in which a chat group makes conversation will be referred to as a "chat room." The chat servers 18 establish communication with the client terminals 10 of all users joining the chat room, and transfer statement data of respective users to the client terminals 10 of other users.

According to the present embodiment, as described above, the chat servers 18a, 18b, 18c, ··· are distributed in different regions. In the illustrated example, the chat servers 18a and 18b are disposed in a region "A" and the chat server 18c is disposed in a region "B" as enclosed by the broken lines. The "region" here may be considered as a unit such as a continent or a country, for example, though the sizes of units which may include a state, a city, a town, a facility, etc., and the criterion for dividing units are not restrictive. One chat server 18 or a plurality of chat servers 18 may be located in one region.

In response to a chat room opening request from any one of the client terminals 10, the relay point allocation server 14 selects a chat server 18 suitable for opening the chat room. Chat participants are more likely to have conversations using a common language, compared with players of Internet games, or the like. Therefore, the common language is highly probably their native language. Since users who share the same native language are highly likely to be located geographically closely to each other, the inventor of the present invention has conceived that, if chat servers are located in different "regions," a chat server is basically determined as commonly close to all users joining one chat room.

Based on the above idea, the gateway 12 extracts the positional information of a client terminal 10 as a request source from a signal transmitted therefrom as representing a request for opening a chat room. Then, the relay point allocation server 14 selects, for example, a chat server 18 in the region where the client terminal 10 as the request source exists. According to the above finding, the chat server 18 thus selected is highly probably close to users who will join the chat later. As a result, a communication delay can be held to a minimum in conversation made through the chat server 18.

The load balancers 16 are located in the respective regions. According to a request from the relay point allocation server 14, the load balancers 16 select one, which is under a low processing burden, of the plural chat servers 18a and 18b located in the same region, and enable the selected chat server 18 to open a chat room. In this manner, the burden on the chat relaying process is appropriately distributed. Note that the present embodiment is also applicable to a system for processing content such as a game concurrently. However, as a conventional technology is applicable to such a system, the system will be omitted from description.

FIG. 3 illustrates an internal circuit configuration of each of the client terminals 10. The client terminal 10 includes a CPU (Central Processing Unit) 23, a GPU (Graphics Processing Unit) 24, and a main memory 26. These components are connected to each other by a bus 30. To the bus 30, there is also connected an input/output interface 28. To the input/output interface 28, there are connected a communication unit 32 including a peripheral device interface such as USB (Universal Serial Bus) or IEEE (Institute of Electrical and Electronic Engineers) 1394, or a network interface for a wired or wireless LAN (Local Area Network), a storage unit 34 such as a hard disk drive or a nonvolatile memory, an output unit 36 for outputting data to a display device, an input unit 38 for receiving data entered from an input device, and a recording medium drive 40 for driving a removable recording medium such as a magnetic disk, an optical disk, or a semiconductor memory.

The CPU 23 controls the client terminal 10 in its entirety by executing an operating system stored in the storage unit 34. The CPU 23 also executes various kinds of programs read from the removable recording medium and loaded into the main memory 26 or downloaded through the communication unit 32. The communication unit 32 also establishes communication with the gateway 12 and the chat servers 18 and sends and receives various kinds of data required for chats.

The GPU 24 has a function as a geometry engine and a function as a rendering processor. The GPU 24 carries out a rendering process according to a rendering command from the CPU 23 and stores a display image in a frame buffer, not illustrated. The GPU 24 then converts the display image stored in the frame buffer into a video signal and outputs the video signal to the output unit 36. The main memory 26 which includes a RAM (Random Access Memory) stores programs and data required for processing. The relay point allocation server 14 and the chat servers 18 may have similar internal circuit configurations.

FIG. 4 illustrates a configuration of functional blocks of each of the client terminals 10 according to the present embodiment. The components illustrated as functional blocks for performing various processes in FIG. 4 and FIGS. 5, 6, and 14 that will be described later may be hardware-implemented by a CPU, a GPU, a main memory, and other LSI (Large Scale Integration) as illustrated in FIG. 3, or may be software-implemented by programs stored in the recording medium or the storage unit and loaded into the memory. Therefore, these functional blocks can be implemented in various forms by hardware only, software only, or hardware and software in combination, as can be understood by those skilled in the art, and should not be limited to either hardware, software, or hardware and software in combination.

The client terminal 10 includes an input information acquiring section 42 accepting user's actions through an input device, a chat processing section 44 performing a process relating to a chat depending on the contents of the accepted action, an output section 46 generating data of images and sounds to be output and outputting the generated data to a display device and an output device such as speakers, a communication section 50 establishing communication with external devices including the gateway 12, the chat server 18, and the like and sending and receiving data, and a chat information storage section 48 storing various items of information regarding a chat.

The input information acquiring section 42 acquires from the input device data representing the start and end of a chat, selection of chat companions, statements, and the way in which talks go on. The input device here may be any of general devices required to carry out a chat, such as a controller, a touch panel, a keyboard, a camera, or a microphone that are connected to the client terminal 10. The chat processing section 44 performs a process of starting or ending chats, inviting chat companions, joining or leaving chats, etc. according to user's actions acquired by the input information acquiring section 42, and generates an image to be displayed and a signal to be sent to external devices. The chat processing section 44 also acquires data representing statements of the user of its own device and statements of chat companions, and generates output data in a predetermined format.

Specifically, in the case of a voice chat, the chat processing section 44 compresses sound data and video image data, acquired by the camera and the microphone of the user of its own device, into a format that can be sent, and decodes and expands sound data and video image data that have been compressed and sent from a chat companion. If there are a plurality of chat companions, the chat processing section 44 appropriately combines or joins sounds and video images from them. In the case of a text chat, the chat processing section 44 generates an image representing text data of a statement sent from a chat companion, together with a text entered by the user of its own device, in a predetermined format such as a time sequence or the like. These processing sequences may be the same as those for general chats.

The output section 46 successively outputs the data of images and sounds thus generated to the output device. The output device may be a general display device such as a liquid crystal display or an organic EL (Electroluminescence) display, or a general audio device such as speakers, or a combination thereof that is connected to the client terminal 10. The communication section 50 sends a signal requesting the start of a chat or the joining to a chat to the gateway 12. Particularly, for starting a chat, i.e., for opening a chat room, the communication section 50 includes the positional information of the client terminal 10 in the request signal, thus enabling an appropriate chat server 18 to open a chat room.

The communication section 50 further sends statement data of the user of its own device to the chat server 18 that has opened the corresponding chat room, and receives statement data from a chat companion from the chat server 18. In addition, the communication section 50 sends a signal requesting the end of a chat or the leaving from a chat to the chat server 18, and sends a signal representing an invitation to a chat directly or indirectly to the client terminal 10 of a companion to be invited to the chat. The chat information storage section 48 stores therein identification information of a chat room that has been open and information representing a key for accessing the chat room. The chat information storage section 48 also stores information regarding chat companion candidates that have been registered in advance by the user of its own device.

FIG. 5 illustrates a configuration of functional blocks of the gateway 12 and the relay point allocation server 14 according to the present embodiment. The gateway 12 includes a communication section 72 for establishing communication with a client terminal 10 and the relay point allocation server 14 and sending and receiving data, and a positional information acquiring section 74 reading the positional information of the client terminal 10 from a signal sent from the client terminal 10.

The communication section 72 acquires a signal requesting the opening of a chat room or the joining to an existing chat room from the client terminal 10, and sends the request signal to the relay point allocation server 14. At this time, the positional information acquiring section 74 acquires the signal requesting the opening of a chat room from the communication section 72, reads the positional information of the client terminal 10 as a signal transmission source, and sends the positional information to the communication section 72. The communication information 72 also sends the positional information to the relay point allocation server 14. Moreover, the communication section 72 acquires the identification information of the chat room that has been open and information representing a key for accessing the chat room from the relay point allocation server 14, and sends the identification information and the key information to the client terminal 10. Further, the communication section 72 relays necessary signals until the client terminal 10 and the chat server 18 establishes communication therebetween.

The relay point allocation server 14 includes a communication section 76 establishing communication with the gateway 12, the load balancers 16, and the chat servers 18 and sending and receiving data, a chat server selecting section 78 matching a client terminal 10 and a chat server 18 or its region, a selection rule storage section 80 storing data representing grounds for matching, a chat managing section 82 managing associations between chat servers 18 and chat rooms, and a chat information storage section 84 storing their associated relations.

The communication section 76 acquires a signal requesting the opening of a chat room or the joining to an existing chat room, sent from a client terminal 10, through the gateway 12, and returns information regarding the chat room that has been open through the gateway 12 to the client terminal 10. The communication section 76 also sends a signal requesting the opening of a chat room to a selected chat server 18 or a load balancer in its region, and receives a result of the request. In the latter case, the communication section 76 selects an appropriate chat server 18 and requests the selected chat server 18 to open a chat room. Moreover, the communication section 76 relays necessary signals until the client terminal 10 and the chat server 18 establishes communication therebetween.

The chat server selecting section 78 selects a chat server 18 that matches the client terminal 10 that has requested the opening of a chat room, or a region where such a chat server 18 exists. In a case where a region is selected, the load balancer 16 may further select a chat server 18 depending on the processing burden. Hereinafter, all cases of selecting a chat server, including the latter case, may be referred to as "selection of a chat server." Information representing grounds for selection is stored in advance in the selection rule storage section 80.

Basically, as described above, the positional information of the client terminals 10 and the regions of the chat servers 18 are associated with each other such that a chat server 18 in the vicinity of the client terminal 10 will be selected. On the other hand, even a chat server 18 located nearby may have a slower communication speed than a remote chat server 18, depending on the communication environment.

Further, in a case where the region of a chat server 18 is selected, a chat server 18 located in a region adjacent to the region to which the client server 10 belongs may be closer to the client terminal 10 or may have a faster communication speed. In view of these considerations, selection rules are preferably prepared to select a chat server 18 on the basis of actual distances and communication speeds. Alternatively, the positional information and communication speed of the client terminal 10 of a chat companion may be further taken into account. Specific examples will be described later.

The chat managing section 82 links the chat server 18 that has opened the chat room in response to a request from the client terminal 10 with the identification information of the chat room, and stores them in the chat information storage section 84. In a case where there is a request for joining the chat from each client terminal 10, the chat managing section 82 specifies the chat server 18 as a destination of the joining request on the basis of the identification information of the chat room included in the request signal, and transfers the request to the chat server 18. This procedure allows the chat server 18 selected from the plurality of chat servers 18 and the client terminals 10 to eventually communicate directly with each other.

FIG. 6 illustrates a configuration of functional blocks of a chat server 18 according to the present embodiment. The chat server 18 includes a communication section 90 establishing communication among the client terminals 10, the relay point allocation server 14, and the load balancers 16 and sending and receiving data, a chat room opening section 92 opening a chat room, a chat processing section 94 appropriately transferring statement data, and a chat information storage section 96 storing information regarding a chat.

The communication section 90 acquires a signal requesting the opening of a chat room from the relay point allocation server 14 directly or through a load balancer 16, and returns the identification information of the chat room that has been open in response to the request signal and information representing a key for accessing the chat room to the relay point allocation server 14. A key that is determined and given uniquely per chat room accessing a chat room will hereinafter be referred to as "token."

The communication section 90 further acquires a communication establishing request from a client terminal 10, i.e., a request for joining a chat, from the relay point allocation server 14, and returns a result of the request to the client terminal 10 through the relay point allocation server 14 and the gateway 12. Moreover, the communication section 90 acquires statement data from the client terminal 10 with which communication has been established, and transfers the statement data to the client terminals 10 of other users who have been joining the same chat.

The chat room opening section 92 opens a chat room according to a chat room opening request. Specifically, the chat room opening section 92 generates identification information and a token and stores them in association with each other in the chat information storage section 96. When the client terminal 10 issues a signal representing a request for joining a chat, the chat room opening section 92 checks identification information and a token included in the signal against the information stored in the chat information storage section 96, and, if they agree with each other, permits the client terminal 10 to join the chat. The chat room opening section 92 stores the identification information of the client terminal 10 permitted to join the chat in association with the identification information of the chat room in the chat information storage section 96.

The chat room opening section 92 generates information required to establish communication and sends the generated information to the client terminal 10 permitted to join the chat through the communication section 90, the relay point allocation server 14, and the gateway 12 to the client terminal 10. When direct communication with the client terminal 10 is established through a predetermined procedure, the chat processing section 94 acquires statement data from each client terminal 10 whenever necessary. On the basis of the identification information of the chat room ancillary to the statement data, the chat processing section 94 specifies the client terminal 10 of another user who is joining the chat on the basis of the identification information of the chat room that is added to the statement data, and transfers the statement data to the specified client terminal 10 as a destination.

When a request signal for leaving the chat is sent from the client terminal 10, the chat processing section 94 deletes the entry of the client terminal 10 as the request source that has been associated with the chat room in the chat information storage section 96 and brings the communication to an end. When a request signal for ending the chat itself, the chat processing section 94 deletes the entry of the chat room in the chat information storage section 96 and brings the communication to an end.

Next, a method of constructing a chat space, which can be realized by the configurations described above, will be described below. FIG. 7 is a timing chart illustrating a processing sequence for opening a chat room according to the present embodiment. First, the client terminal 10a accepts a request to start a chat from the user (S8). Then, the client terminal 10a requests an authentication server, not illustrated, to authenticate itself according to a predetermined authentication procedure and acquires the authority to access the chat system (S10). The access authority includes the positional information of the client terminal 10a that has been identified by the authentication procedure. Since the global IP address acquired when the client terminal 10a is connected to the Internet provider includes the positional information of the client terminal 10a, the global IP address may be used as the positional information.

The client terminal 10a then issues a request to open a chat room, which includes the access authority (S12). The request is first acquired by the gateway 12 that extracts the positional information included in the request signal and transfers the request to the relay point allocation server 14 (S14). The chat server selecting section 78 of the relay point allocation server 14 refers to the selection rule storage section 80 and selects the chat server 18a that matches the client terminal 10a or its region (S16). FIG. 7 illustrates the selection of the region.

The relay point allocation server 14 further acquires the address of the load balancer 16a provided in the selected region from the selection rule storage section 80 and transfers the chat room opening request to the load balancer 16a (S18). In some of the drawings, among the plural load balancers 16, the load balancer 16a in the selected region is indicated by the solid line, whereas the other load balancers are indicated by the broken lines. The load balancer 16a transfers the chat room opening request to the chat server 18a that has been selected not to unbalance processing burdens among the chat servers 18 managed by the load balancer 16a (S20). In some of the drawings, among the plural chat servers 18, the selected chat server 18a is indicated by the solid line, whereas the other chat servers are indicated by the broken lines.

The chat server 18a that has received the chat room opening request performs a process of opening a chat room. Specifically, the chat server 18a generates identification information (room ID (Identification)) of a chat room and a token for joining the chat room. The chat server 18a then returns the generated room ID and token as the result of the chat room opening request, together with the private IP address (server IP) of the chat server 18a itself, to the load balancer 16a (S22). The load balancer 16a transfers the acquired opening request result to the relay point allocation server 14 (S24).

Note that, in a case where the relay point allocation server 14 directly selects the chat server 18a, the processing of the load balancer 16a can be omitted as a matter of course. The relay point allocation server 14 that has received the result of the chat room opening request stores the room ID and the server IP in association with each other in the chat information storage section 84. Therefore, even if a request signal in which only a room ID is designated is subsequently sent from a client terminal 10, the relay point allocation server 14 can transfer the request signal to the appropriate chat server 18a. Then, the relay point allocation server 14 returns the room ID and the token as the result of the chat room opening request through the gateway 12 to the client terminal 10a (S26 and S28).

FIGS. 8 and 9 are timing charts illustrating a processing sequence for joining the open chat room, following the processing sequence illustrated in FIG. 7. Specifically, the client terminal 10a that has requested the opening of the chat room has already acquired the room ID and the token of the chat room at this time. The client terminal 10a first issues a request to join the chat room that has been open (S30). At this time, the client terminal 10a includes the room ID and the token of the chat room in the signal to be sent.

The joining request signal is sent through the gateway 12 to the relay point allocation server 14 (S32). The relay point allocation server 14 then refers to the chat information storage section 84, identifies the server IP of the chat server 18a associated with the room ID that has been sent, and transfers the joining request signal to the chat server 18a (S34). In response to the request signal, the chat server 18a assigns identification information (peer ID) to the client terminal 10a as a node of the chat, and stores the identification information in association with the room ID in the chat information storage section 96 (S35). At this time, the chat server 18a compares the pair of the room ID and the token included in the request signal with those stored in the chat information storage section 96, and registers the pair only when the compared items agree with each other.

Then, the chat server 18a sends the assigned peer ID through the relay point allocation server 14 and the gateway 12 to the client terminal 10a as the request source (S36, S38, and S40). Next, the client terminal 10a acquires SDP (Session Description Protocol) of its own and sends the SDP through the gateway 12 to the relay point allocation server 14 (S42 and S44). The SDP represents general information required to establish communication, such as the kind of data to be sent and the IP address and port number of its own.

At this time, the client terminal 10a includes the room ID of the chat room and the peer ID assigned to itself in the signal to be sent. Also in this case, the relay point allocation server 14 refers to the chat information storage section 84, identifies the corresponding chat server 18a, and transfers the SDP to the chat server 18a (S46). The chat server 18a stores the sent SDP in association with the peer ID of the client terminal as the transmission source in the chat information storage section 96, acquires SDP of its own, and sends the acquired SDP through the relay point allocation server 14 and the gateway 12 to the client terminal 10a (S48, S50, and S52).

Then, the client terminal 10a and the chat server 18a searches for a communication route, using each other's SDP and establishes communication with each other (S54). Actually, this processing includes a process for exchanging candidates of ICE (Interactive Connectivity Establishment) between the client terminal 10a and the chat server 18a. The ICE refers to information representing a connectable communication route. In this process as well, the client terminal 10a includes the room ID in the sent signal, allowing the relay point allocation server 14 to transfer the signal to the chat serer 18a associated with the room ID. According to these proceedings, it is possible to send and receive data directly between the client terminal 10a and the chat server 18a.

Referring now to FIG. 9, the client terminal 10a accepts an operation input to select a chat companion from the user (S56). For example, the client terminal 10a displays a list of friends registered in the chat information storage section 48 on the display device and accepts a selecting operation by the user. Then, the client terminal 10a reads the identification information of the selected user or the client terminal 10b operated by the selected user from the chat information storage section 48, and issues a notification for inviting the selected user to the chat to the selected user or the client terminal 10b as a destination (S58). In the illustrated example, the notification is temporarily received by a "session manager" and then transferred therefrom to the companion user (S60).

Now, the session manager is prepared separately from the chat system according to the present embodiment, and is of a general configuration for realizing the transmission and reception of messages, not limited to any particular specific notification procedures. However, the functions of the session manager may be included in the chat system according to the present embodiment. At any rate, the client terminal 10a includes the room ID and the token of the chat room in the invitation notification. If the companion user, having seen the notification, operates the client terminal 10b to join the chat, then the client terminal 10b accepts the action (S62) and issues a request to join the chat room (S64). At this time, the client terminal 10b includes the room ID and the token of the chat room in the signal to be sent.

Subsequently, in the same manner as the joining process of the client terminal 10a, the joining request is sent through the relay point allocation server 14 to the chat server 18a (S66 and S68), and the peer ID of the client terminal 10b is returned from the chat server 18a (S70, S72, and S74). Naturally, the client terminal 10b is also registered as joining the chat only in a case where the pair of the room ID and the token is correct, and the peer ID is sent thereto. Thereafter, communication is established between the client terminal 10b and the chat server 18a through the same proceedings (not illustrated) as those described above with reference to FIG. 8 (S76).

The proceedings relating to the client terminal 10b illustrated in FIG. 9 are also carried out similarly with respect to the client terminals 10 of all users designated as chat participant candidates. Then, when the chat server 18a transfers statement data of the user of each of the client terminals 10 to the other client terminals 10, conversation is established among the client terminals 10 through the chat server 18a as a relay point. With this configuration, since the companion to which each client terminal 10 is to be connected for the chat is limited to one chat server 18, stable communication is possible, regardless of the number of chat participants.

FIG. 10 is a diagram illustrating a structural example of data stored in the selection rule storage section 80 of the relay point allocation server 14. In this example, selection rules 100 have a structure in which a terminal region field 102 representing the identification information of the regions where the client terminals 10 exist and a server region field 104 representing the identification information of the regions where the chat servers 18 exist are associated with each other. For example, the region of a client server 10 represented by a code "0001" is associated with the region of a chat server represented by identification information "A."

The unit of regions found from the positional information of the client terminals 10 and the unit of regions given to the chat servers 18 may be the same as or different from each other. The units of both the regions may be related to each other such that one of them is included in the other, or may partly overlap each other, or may not overlap each other at all. At any rate, for each of the unit regions of the client terminals 10, the region of a chat server 18 capable of permitting communication at a speed as fast as possible is predetermined and prepared as the selection rules 100.

The chat server selecting section 78 of the relay point allocation server 14 refers to the selection rules 100 and acquires the region of a chat server 18 that corresponds to the positional information of a client terminal 10 that is included in a signal representing a chat room opening request, thereby selecting an optimum chat server 18. Note that various kinds of parameters and their format illustrated in FIGS. 11 and 12 are given by way of example only and are not limited to those illustrated. For example, the selection rules 100 may include a field representing the identification information of the chat servers 18 instead of the server region field 104, so that the chat servers 18 can directly be selected. The regions stored in the server region field 104 are separately associated respectively with the load balancers 16 or the chat servers 18 disposed in the respective regions.

FIG. 11 illustrates a structural example of data stored in the chat information storage section 84 of the relay point allocation server 14. In this example, chat information 110 has a structure in which a server IP field 112 representing the IP addresses of the chat servers 18 and a room ID field 114 representing the identification information of chat rooms that have been open are associated with each other. For example, the chat server 18 whose server IP is "100.100.100.111" has opened three chat rooms whose respective room IDs are "01," "03," and "08."

The relay point allocation server 14 updates the entries of the chat information 110 on the basis of responses from the chat servers 18 that have opened chat rooms. This allows server IPs to be derived from the room IDs, making it possible to transfer subsequent request signals from client terminals 10 to appropriate chat servers 18. When a chat is finished by a user's action, the relay point allocation server 14 acquires a notification to that effect from the chat server 18, and deletes the entry from the room ID field 114.

FIG. 12 illustrates a structural example of data stored in the chat information storage section 96 of a chat server 18. In this example, chat information 120 has a structure in which a room ID field 122 representing the identification information of chat rooms opened by its own device, a token field 124 representing the key information required to join the respective chats, and a peer ID field 126 representing the identification information of client terminals 10 that have been joining the chats are associated with each other. For example, the token of the chat room whose room ID is "01" is "2A," and the chat is joined by five client terminals 10 whose peer IDs are "01aa," "02ac," "00cv," "04ka," and "02pp."

A chat server 18 issues a room ID and a token for opening a chat room, and stores them in association with each other in the room ID field 122 and the token field 124, respectively. The chat server 18 permits a client terminal 10 to join the chat only if the pair of the room ID and the token included in a chat joining request from the client terminal 10 agree with the room ID and the token that have been stored, issues a peer ID to the client terminal 10 as the request source, and registers the peer ID in the peer ID field 126. Each peer ID is separately associated with information required to send and receive data, such as SDP and ICE determined when communication has actually been established. During the chat, the client terminal 10 adds the room ID and the peer ID to statement data of the user and sends them to the chat server 18.

In response to the sent data, the chat server 18 refers to the chat information 120, acquires the peer IDs corresponding to the room ID, and transfers the statement data to the other client terminals 10 that has been joining the chat. If the user of either one of the client terminals 10 whose peer IDs are listed as entries operates to leave the chat, then the chat server 18 deletes the entry from the peer ID field 126. If the user operates to end the chart, then the chat server 18 deletes the room ID and the entries in the corresponding fields.

FIG. 13 is a diagram that is illustrative of a policy for the relay point allocation server 14 according to the present embodiment to select a chat server 18 for opening a chat room or a region thereof. FIG. 13 illustrates the positional relation among the client terminals 10a, 10b, and 10c and the chat servers 18a, 18b, and 18c. The area covered by FIG. 13 may represent an entire global region or may represent a smaller region than that. The most simple criterion by which a chat server can be selected is to take only distances into account. For example, since the chat server 18b is closest to the client terminal 10a, the chat server 18b is selected to open a chat room.

On the other hand, in a case where the client terminal 10a or a region "a" to which the client terminal 10a belongs is included mostly or wholly in a region A to which the chat server 18a belongs, the chat server 18a in the region A can be selected. This policy has a high affinity with the characteristics of chats described above. For example, in a case where the region A is regarded as a country, inasmuch as the chat participants who chat using the same language are highly probably in the same country, it is highly possible that the chat server 18a is generally closer to the chat participants even if chat participants change by subsequently joining or leaving the chat.

A communication bandwidth may be taken into account in addition to such a distance or areal viewpoint. For example, even though the chat server 18b is closest to the client terminal 10a, it may be considered that a network link existing in a sufficient communication environment lies between the client terminal 10a and the chat server 18a. In this case, a low-delay chat can be achieved by selecting the chat server 18a.

For constructing a chat system, therefore, selection rules 100 are prepared by taking into account either the inclusive relation between distance and region or the communication bandwidth or a combination thereof. Since the client terminals 10a, 10b, and 10c of the users who have conversations using the same language in chats are highly probably present at close distances, e.g., within one country in the world, as described above, selecting the chat server 18a or the chat server 18b in response to a chat room opening request from the client terminal 10a makes it highly possible to achieve highspeed communication with the client terminals 10b and 10c of other chat participants.

Specifically, it is possible to avoid selecting the chat server 18c that is remote from any one of the client terminals 10a, 10b, and 10c, reducing communication delays due to unnecessary routes. However, selection rules may not be fixed as one communication route has different communication speeds depending on how it is used. For example, each of the client terminals 10a, 10b, and 10c periodically communicates with all the chat servers 18a, 18b, and 18c and measures communication speeds, and indicates the results through the gateway 12 to the relay point allocation server 14. Based on the results, the relay point allocation server 14 updates associations in selecting conditions.

For example, if the chat server providing the highest communication speed changes from the chat server 18b to the chat server 18a as indicated by the results measured by the client terminal 10a, the relay point allocation server 14 updates the server region associated with the terminal region "a" from the region of the chat server 18b to the region A of the chat server 18a in the selection rules 100. In this manner, the chat server 18 that is capable of communicating at the highest speed at the time of opening a chat room can be used.

As an application of the above approach, a chat server 18 can be selected in view of communication speeds between not only the client terminal 10a that has requested the opening of a chat room, but also the client terminals 10b and 10c of the chat companions, and the chat server 18. Specifically, in a case where a user joining a chat or a user about to join a chat is already known, average values of communication speeds between the chat servers 18 and the client terminals 10 are calculated. Then, the chat server 18 with the highest average speed is selected to achieve a chat with a smallest delay as a whole.

FIG. 14 illustrates a configuration of functional blocks of a client terminal 10 in a mode for selecting a chat server 18 on the basis of measured values of communication speeds. Those blocks which have the same functions as those of the client terminal 10 illustrated in FIG. 4 are denoted by identical reference signs, and will be omitted from description below. The client terminal 10a illustrated in this figure includes an input information acquiring section 42, a chat processing section 44, an output section 46, and a chat information storage section 48 as is the case with the client terminal 10 illustrated in FIG. 4. According to the present mode, the client terminal 10a also includes a communication section 50a that has a speed measuring section 51 periodically measuring communication speeds between itself and the chat servers 18.

The speed measuring section 51 periodically establishes communication with all the chat servers 18 or candidate chat servers 18 that have been narrowed down on the basis of distances or communication bandwidths, and measures communication speeds by sending and receiving predetermined data. A general technology is applicable to the measuring process itself. The communication section 50a basically functions similarly to the communication section 50 of the client terminal 10 illustrated in FIG. 4. However, when the speed measuring section 51 measures communication speeds, the communication section 50a also sends the data of the measured communication speeds through the gateway 12 to the relay point allocation server 14.

The functional blocks of the relay point allocation server 14 may be similar to those illustrated in FIG. 5. However, the selection rule storage section 80 stores therein actually measured values of communication speeds sent from each of the client terminals 10 per combination of the client terminals 10 and the chat servers 18. Then, the chat server selecting section 78 updates information if the associations in the selection rules 100 illustrated in FIG. 10 need to be updated, i.e., if the fastest chat server has changed, as described above.

Alternatively, at the time that a request is made to open a chat room without preparing the selection rules 100, the fastest chat server 18 for the client terminal 10a that has issued the opening request may be selected. Further alternatively, the chat server 18 whose average communication speed is highest among all the client terminals 10 that are going to join a chat may be selected, as described above. The users who are going to join a chat may be designated by the user who has request the opening of the chat or may be presumed from records in the past.

FIG. 15 is a flowchart of a processing sequence for selecting a chat server 18 on the basis of average values of communication speeds with a plurality of client terminals. The flowchart corresponds to the processing of S12 through S16 illustrated in FIG. 7. First, the speed measuring sections 51 of the client terminals 10a and 10b establish communication with the chat servers, measure communication speeds (S80a and S80b) therewith, and send measured results to the relay point allocation server 14 (S82a and S82b). Targets to be measured and sent are not limited to any kinds insofar as they are parameters that directly or indirectly represent communication speeds.

Though only the two client terminals 10a and 10b are illustrated as representatives in FIG. 15, the processing sequence is periodically carried out by all the client terminals 10. The relay point allocation server 14 progressively stores last measured communication speeds per combination of the client terminals 10 and the chat servers 18. The client terminal 10a that is operated by the user to open a chat sends a request to open a chat room to the relay point allocation server 14 (S84). At this time, the client terminal 10a also simultaneously sends the identification information of companion users who are going to join the chat or the client terminals 10b, 10c, ⋯ thereof.

The relay point allocation server 14 that has received the request calculates, per chat server 18, average values of communication speeds among the client terminals 10 of the users who are going to join the chat and the chat server 18 (S86). If it is assumed herein that a communication speed between an nth client terminal among the client terminals 10 that are going to join the chat and an Nth chat server is represented by $S(n,N)$, then an average communication speed $S_{ave}(N)$ calculated with respect to the Nth chat server is obtained by the following equation:

$$S_{ave}(N) = \Sigma_n S(n, N)$$

Then, the relay point allocation server 14 selects a chat server 18 that attains the highest average speed $S_{ave}(N)$ as the server for opening the chat room (S88).

Note that, in the illustrated example, the significance of chat servers is compared on the basis of the actually measured values of communication speeds. However, a chat server may be selected on the basis of the distances between the client terminals 10 that are going to join a chat and the chat servers 18. In this case, if the client terminals 10 are mobile terminals, then the relay point allocation server 14 collects the distances between the client terminals 10 and the chat servers 18 as well as the communication speeds. If the client terminals 10 are installed terminals, then since the distances are fixed, they can be acquired in advance.

At any rate, the relay point allocation server 14 may select a chat server 18 whose average value of the distances from the client terminals of those who are going to join a chat is smallest. Note that the parameters used as a basis for selecting a chat server are not limited to communication speeds and distances, but may be anything affecting delay times taken until statements reach chat companions. At any rate, a chat server can uniquely be determined by similarly comparing average values with respect to all the client terminals. Alternatively, a chat server may be selected from a multilateral standpoint by comparing weighted sums of average values of a plurality of parameters as scores.

According to the present embodiment described above, in a chat system in which a plurality of users have conversations with each other via a network, a plurality of chat servers for relaying statement data sent from client terminals are disposed in different regions, and a relay point allocation server for selecting an appropriate chat server is provided. Since the chat servers relay statement data, communication routes to be secured by the client terminals are simplified, making it possible to provide a chat environment that is stable, regardless of the number of chat participants, compared with peer-to-peer connections. Moreover, as communication routes required for chats are limited, other pieces of content to be enjoyed concurrent with the chats are less likely affected by the chats. Further, inasmuch as actual companion's terminals as viewed from the client terminals are made abstract, security problems such as attacks and impersonations from malicious users are easier to avoid.

The relay point allocation server selects an appropriate chat server on the basis of distances, communication bandwidths, communication speeds, etc. for thereby minimizing delays until statements reach chat companions through the chat server. Because of the characteristics of chats that they are conversions made using one language, the chat participants are highly probably present at positions that are geographically closely to each other, so that the relative merits of the chat server as viewed from the client terminals are basically common among the chat participants irrespective of the number of the chat participants. Based on these features, an optimum chat server is selected to realize a chat system that is stable and causes less delays.

[Industrial Applicability]

The present invention is applicable to various types of information processing apparatuses including on-line systems such as chat systems or game systems, and servers, game devices, portable terminals, and personal computers for use in on-line systems.

[Reference Signs List]

1: Chat system
10: Client terminal
12: Gateway
14: Relay point allocation server
16: Load balancer
18: Chat server
42: Input information acquiring section
44: Chat processing section
46: Output section
48: Chat information storage section
50: Communication section
72: Communication section
74: Positional information acquiring section
76: Communication section
78: Chat server selecting section
80: Selection rule storage section
82: Chat managing section
84: Chat information storage section
90: Communication section
92: Chat room opening section
94: Chat processing section
96: Chat information storage section

**Claims**

1. A relay point allocation server (14) in a chat system in which a plurality of members that each have been joining a chat space have conversations with each other via a network using client terminals (10a, 10b, 10c), comprising:

   a communication section (72) acquiring an opening request to open the chat space from any one of the client terminals (10a, 10b, 10c), the opening allowing members via the client terminals (10a, 10b, 10c) to relay statement data in the chat space; and
   a chat server selecting section (78) requesting a chat server (18a, 18b, 18c) selected on a basis of predetermined rules from a plurality of chat servers (18a, 18b, 18c) disposed in a distributed fashion external to the relay point allocation server (14) and relaying statement data transmitted among the client terminals in response to the opening request, to relay statement data in the chat space corresponding to the opening request, wherein the chat server selecting section (78) selects the chat server (18a, 18b, 18c) on the basis of predetermined rules including at least any one of positional relation among the client terminals (10a, 10b, 10c) and regions in which the chat servers (18a, 18b, 18c) are present and communication speeds among the client terminals (10a, 10b, 10c) and the chat servers (18a, 18b, 18c).

2. The relay point allocation server (14) according to claim 1, wherein the chat server selecting section (78) continuously collects parameters as a basis for selecting the chat server (18a, 18b, 18c), and selects the chat server (18a, 18b, 18c) depending on the parameters at the time that the opening request is issued.

3. The relay point allocation server (14) according to claim 1 or 2, wherein the chat server selecting section (78) selects the chat server (18a, 18b, 18c) on a basis of average communication speeds among the client terminals (10a, 10b, 10c) used by members who are going to join the chat space and the chat servers (18a, 18b, 18c) at the time that the opening request to open the chat space is issued.

4. The relay point allocation server (14) according to claim 1, wherein the chat server selecting section (78) acquires a region corresponding to positional information of the client terminal (10a, 10b, 10c) that has issued the opening request to open the chat space, and selects the chat server (18a, 18b, 18c) that is present in the region.

5. The relay point allocation server (14) according to any one of claims 1 through 4, further comprising:

a chat information storage section (84) storing identification information of the chat space created by the chat server (18a, 18b, 18c) in response to the request to relay the statement data and identification information of the chat server (18a, 18b, 18c) in association with each other; and
a chat managing section (82) acquiring a request signal for establishing communication from the client terminal (10a, 10b, 10c) to the chat server (18a, 18b, 18c), and transferring the request signal to the chat server (18a, 18b, 18c) on a basis of the identification information of the chat space.

6. A chat system (1) in which a plurality of members that each have been joining a chat space have conversations with each other via a network, comprising:

a plurality of client terminals (10a, 10b, 10c) outputting statement data of members to the network, acquiring statement data from other members from the network, and outputting the acquired statement data to an output device;
a plurality of chat servers (18a, 18b, 18c) disposed in a distributed fashion and relaying the statement data transmitted among the client terminals; and
a relay point allocation server (14) different from the chat servers (18a, 18b, 18c) and configured to receive an opening request, wherein the opening allowing members via the client terminals (10a, 10b, 10c) to relay statement data in the chat space, the relay point allocation server (14) responsive to an opening request to open the chat space from any one of the client terminals (10a, 10b, 10c) and requesting a chat server (18a, 18b, 18c) selected on a basis of predetermined rules from the plurality of chat servers (18a, 18b, 18c) to relay statement data in the chat space corresponding to the opening request, wherein the chat server (18a, 18b, 18c) is selected on the basis of predetermined rules including at least any one of positional relation among the client terminals (10a, 10b, 10c) and regions in which the chat servers (18a, 18b, 18c) are present and communication speeds among the client terminals (10a, 10b, 10c) and the chat servers (18a, 18b, 18c).

7. A client terminal (10) for use in a chat system (1) in which a plurality of members that each have been joining a chat space have conversations with each other via a network, comprising:

an input information acquiring section (42) acquiring statements of the members that are using client terminals (10a, 10b, 10c);
a communication section (50) sending and receiving statement data by establishing communication with a chat server selected on a basis of predetermined rules from a plurality of chat servers (18a, 18b, 18c) relaying statement transmitted data among the client terminals (101, 10b, 10c), wherein the chat server (18a, 18b, 18c) is selected on the basis of predetermined rules including at least any one of positional relation among the client terminals (10a, 10b, 10c) and regions in which the chat servers (18a, 18b, 18c) are present and communication speeds among the client terminals (10a, 10b, 10c) and the chat servers (18a, 18b, 18c); and
an output section (46) successively outputting the statement data of the members in a predetermined format to an output device,
wherein the communication section (50) is responsive to a chat opening request acquired by the input information acquiring section (42), issues an opening request to open a chat space to a relay point allocation server (14) different from the chat servers (18a, 18b, 18c) for selecting the chat server (18a, 18b, 18c), wherein the opening allowing members via the client terminals (10a, 10b, 10c) to relay statement data in the chat space, and establishes communication with the selected chat server (18a, 18b, 18c) on a basis of information sent from the relay point allocation server (14) as a result of the opening request.

8. The client terminal according (10) to claim 7, wherein the communication section (50) includes a speed measuring section continuously measuring communication speeds with the plurality of chat servers, and sending a measured result to the relay point allocation server (14) for being used in selecting the chat server (18a, 18b, 18c) each time the measured result is obtained.

**9.** A chat server (18) for relaying statement data transmitted between client terminals (10a, 10b, 10c), among a plurality of chat servers (18a, 18b, 18c) disposed in a distributed fashion in a chat system (1) in which a plurality of members that each have been joining a chat space have conversations with each other via a network using client terminals (10a, 10b, 10c), comprising:

a chat space opening section (92) opening a chat space in response to a request from a relay point allocation server (14) different from the plurality of chat servers (18a, 18b, 18c) and selecting a chat server on a basis of predetermined rules in response to an opening request to open the chat space that is issued by any one of the client terminals, wherein the opening allows members via the client terminals (10a, 10b, 10c) to relay statement data in the chat space, wherein the chat server (18a, 18b, 18c) is selected on the basis of predetermined rules including at least any one of positional relation among the client terminals (10a, 10b, 10c) and regions in which the chat servers (18a, 18b, 18c) are present and communication speeds among the client terminals (10a, 10b, 10c) and the chat servers (18a, 18b, 18c); and

a chat processing section (94) accepting a request to join the chat space that is issued from each of the client terminals (10a, 10b, 10c) from the relay point allocation server (14), and establishing direct communication with the client terminals (10a, 10b, 10c) that have satisfied predetermined conditions, thereby relaying the statement data.

**10.** A chat space construction method in a chat system (1) in which a plurality of members that each have been joining a chat space have conversations with each other via a network using client terminals (10a, 10b, 10c), comprising:

a step of issuing an opening request to open the chat space from any one of the client terminals (10a, 10b, 10c), wherein the opening allows members via the client terminals (10a, 10b, 10c) to relay statement data in the chat space;

a step of requesting, from a relay point allocation server (14), a chat server (18a, 18b, 18c) selected on a basis of predetermined rules from a plurality of chat servers (18a, 18b, 18c) disposed in a distributed fashion external to the relay point allocation server (14) and relaying statement data transmitted among the client terminals (10a, 10b, 10c) in response to the opening request, to relay statement data in the chat space corresponding to the opening request, wherein the chat server (18a, 18b, 18c) is selected on the basis of predetermined rules including at least any one of positional relation among the client terminals (10a, 10b, 10c) and regions in which the chat servers (18a, 18b, 18c) are present and communication speeds among the client terminals (10a, 10b, 10c) and the chat servers (18a, 18b, 18c); and

a step of opening the chat space by the selected chat server (18a, 18b, 18c) and establishing direct communication with the client terminals (10a, 10b, 10c), thereby relaying the statement data.

**11.** A computer program for enabling a relay point allocation server (14) in a chat system (1) in which a plurality of members that each have been joining a chat space have conversations with each other via a network using client terminals (10a, 10b, 10c), to perform:

a function to acquire an opening request to open the chat space from any one of the client terminals (10a, 10b, 10c), wherein the opening allows members via the client terminals (10a, 10b, 10c) to relay statement data in the chat space; and

a function to request a chat server (18a, 18b, 18c) selected on a basis of predetermined rules from a plurality of chat servers (18a, 18b, 18c) disposed in a distributed fashion external to the relay point allocation server (14) and relaying statement data transmitted among the client terminals (10a, 10b, 10c) in response to the opening request, to relay statement data in the chat space corresponding to the opening request, wherein the chat server (18a, 18b, 18c) is selected on the basis of predetermined rules including at least any one of positional relation among the client terminals (10a, 10b, 10c) and regions in which the chat servers (18a, 18b, 18c) are present and communication speeds among the client terminals (10a, 10b, 10c) and the chat servers (18a, 18b, 18c).

**Patentansprüche**

**1.** Relaispunktzuweisungsserver (14) in einem Chatsystem, in dem eine Vielzahl von Mitgliedern, die jeweils einem Chatraum beigetreten sind, über ein Netzwerk zwischen Verwendung von Client-Endgeräten (10a, 10b, 10c) Gespräche miteinander führen, umfassend:

einen Kommunikationsabschnitt (72), der eine Öffnungsanforderung, den Chatraum zu öffnen, von einem beliebigen der Client-Endgeräte (10a, 10b, 10c) erfasst, wobei das Öffnen es Mitgliedern über die Client-Endgeräte (10a, 10b, 10c) ermöglicht, Aussagedaten in dem Chatraum weiterzugeben; und

einen Chatserverauswahlabschnitt (78), der einen Chatserver (18a, 18b, 18c) anfordert, Aussagedaten in dem Chatraum entsprechend der Öffnungsanforderung weiterzugeben, der auf einer Grundlage von zuvor bestimmten Regeln aus einer Vielzahl von Chatservern (18a, 18b, 18c) als Reaktion auf die Öffnungsanforderung ausgewählt wird, die in einer verteilten Weise außerhalb des Relaispunktzuweisungsservers (14) angeordnet sind und Aussagedaten, die zwischen den Client-Endgeräten übertragen werden, weitergeben, wobei der Chatserverauswahlabschnitt (78) den Chatserver (18a, 18b, 18c) auf der Grundlage von zuvor bestimmten Regeln auswählt, einschließlich mindestens einer beliebigen von Positionsbeziehungen zwischen den Client-Endgeräten (10a, 10b, 10c) und Regionen, in denen die Chatserver (18a, 18b, 18c) vorhanden sind, und Kommunikationsgeschwindigkeiten zwischen den Client-Endgeräten (10a, 10b, 10c) und den Chatservern (18a, 18b, 18c).

**2.** Relaispunktzuweisungsserver (14) nach Anspruch 1, wobei der Chatserverauswahlabschnitt (78) Parameter als eine Grundlage für ein Auswählen des Chatservers (18a, 18b, 18c) kontinuierlich sammelt und den Chatserver (18a, 18b, 18c) abhängig von den Parametern zu dem Zeitpunkt, an dem die Öffnungsanforderung erteilt wird, auswählt.

**3.** Relaispunktzuweisungsserver (14) nach Anspruch 1 oder 2, wobei der Chatserverauswahlabschnitt (78) den Chatserver (18a, 18b, 18c) auf einer Grundlage von durchschnittlichen Kommunikationsgeschwindigkeiten zwischen den Client-Endgeräten (10a, 10b, 10c), die durch Mitglieder verwendet werden, die dem Chatraum beitreten werden, und den Chatservern (18a, 18b, 18c) zu dem Zeitpunkt auswählt, an dem die Öffnungsanforderung, den Chatraum zu öffnen, erteilt wird.

**4.** Relaispunktzuweisungsserver (14) nach Anspruch 1, wobei der Chatserverauswahlabschnitt (78) eine Region entsprechend Positionsinformationen des Client-Endgeräts (10a, 10b, 10c) erfasst, das die Öffnungsanforderung, den Chatraum zu öffnen, erteilt hat, und den Chatserver (18a, 18b, 18c) auswählt, der in der Region vorhanden ist.

**5.** Relaispunktzuweisungsserver (14) nach einem der Ansprüche 1 bis einschließlich 4, ferner umfassend:

einen Chatinformationsspeicherabschnitt (84), der Identifikationsinformationen des Chatraums, der durch den Chatserver (18a, 18b, 18c) als Reaktion auf die Anforderung, die Aussagedaten weiterzugeben, geschaffen wird, und Identifikationsinformationen des Chatservers (18a, 18b, 18c) in Verbindung miteinander speichert; und

einen Chatverwaltungsabschnitt (82), der ein Anforderungssignal zum Herstellen einer Kommunikation von dem Client-Endgerät (10a, 10b, 10c) zu dem Chatserver (18a, 18b, 18c) erfasst und das Anforderungssignal auf einer Grundlage der Identifikationsinformationen des Chatraums an den Chatserver (18a, 18b, 18c) überträgt.

**6.** Chatsystem (1), in dem eine Vielzahl von Mitgliedern, die jeweils einem Chatraum beigetreten sind, über ein Netzwerk Gespräche miteinander führen, umfassend:

eine Vielzahl von Client-Endgeräten (10a, 10b, 10c), die Aussagedaten von Mitgliedern an das Netzwerk ausgeben, Aussagedaten von anderen Mitgliedern von dem Netzwerk erfassen und die erfassten Aussagedaten an eine Ausgabevorrichtung ausgeben;

eine Vielzahl von Chatservern (18a, 18b, 18c), die in einer verteilten Weise angeordnet sind und die Aussagedaten, die zwischen den Client-Endgeräten übertragen werden, weitergeben; und

einen Relaispunktzuweisungsserver (14), der sich von den Chatservern (18a, 18b, 18c) unterscheidet und konfiguriert ist, um eine Öffnungsanforderung zu empfangen, wobei das Öffnen es Mitgliedern über die Client-Endgeräte (10a, 10b, 10c) ermöglicht, Aussagedaten in dem Chatraum weiterzugeben, wobei der Relaispunktzuweisungsserver (14) auf eine Öffnungsanforderung, den Chatraum zu öffnen, von einem beliebigen der Client-Endgeräte (10a, 10b, 10c) reagiert und einen Chatserver (18a, 18b, 18c), der auf einer Grundlage von zuvor bestimmten Regeln aus der Vielzahl von Chatservern (18a, 18b, 18c) ausgewählt wird, anfordert, Aussagedaten in dem Chatraum entsprechend der Öffnungsanforderung weiterzugeben, wobei der Chatserver (18a, 18b, 18c) auf der Grundlage von zuvor bestimmten Regeln ausgewählt wird, einschließlich mindestens einer beliebigen von Positionsbeziehungen zwischen den Client-Endgeräten (10a, 10b, 10c) und Regionen, in denen die Chatserver (18a, 18b, 18c) vorhanden sind, und Kommunikationsgeschwindigkeiten zwischen den Client-Endgeräten (10a, 10b, 10c) und den Chatservern (18a, 18b, 18c).

**7.** Client-Endgerät (10) zur Verwendung in einem Chatsystem (1), in dem eine Vielzahl von Mitgliedern, die jeweils einem Chatraum beigetreten sind, über ein Netzwerk Gespräche miteinander führen, umfassend:

einen Eingabeinformationserfassungsabschnitt (42), der Aussagen der Mitglieder erfasst, die Client-Endgeräte (10a, 10b, 10c) verwenden; einen Kommunikationsabschnitt (50), der Aussagedaten durch Herstellen der Kommunikation mit einem Chatserver sendet und empfängt, der auf einer Grundlage von zuvor bestimmten Regeln aus einer Vielzahl von Chatservern (18a, 18b, 18c), die übertragene Aussagedaten zwischen den Client-Endgeräten (101, 10b, 10c) weitergeben, ausgewählt wird, wobei der Chatserver (18a, 18b, 18c) auf der Grundlage von zuvor bestimmten Regeln ausgewählt wird, einschließlich mindestens einer beliebigen von Positionsbeziehungen zwischen den Client-Endgeräten (10a, 10b, 10c) und Regionen, in denen die Chatserver (18a, 18b, 18c) vorhanden sind, und Kommunikationsgeschwindigkeiten zwischen den Client-Endgeräten (10a, 10b, 10c) und den Chatservern (18a, 18b, 18c); und einen Ausgabeabschnitt (46), der die Aussagedaten der Mitglieder in einem zuvor bestimmten Format an eine Ausgabevorrichtung nacheinander ausgibt, wobei der Kommunikationsabschnitt (50) auf eine Chatöffnungsanforderung, die durch den Eingabeinformationserfassungsabschnitt (42) erfasst wird, reagiert, eine Öffnungsanforderung, einen Chatraum zu öffnen, an einen Relaispunktzuweisungsserver (14), der sich von den Chatservern (18a, 18b, 18c) unterscheidet, zum Auswählen des Chatservers (18a, 18b, 18c) erteilt, wobei das Öffnen es Mitgliedern über die Client-Endgeräte (10a, 10b, 10c) ermöglicht, Aussagedaten in dem Chatraum weiterzugeben, und die Kommunikation mit dem ausgewählten Chatserver (18a, 18b, 18c) auf einer Grundlage von Informationen, die von dem Relaispunkzuweisungsserver (14) als ein Ergebnis der Öffnungsanforderung gesendet werden, herstellt.

8. Client-Endgerät nach (10) Anspruch 7, wobei der Kommunikationsabschnitt (50) einen Geschwindigkeitsmessabschnitt einschließt, der die Kommunikationsgeschwindigkeiten mit der Vielzahl von Chatservern kontinuierlich misst und ein gemessenes Ergebnis an den Relaispunktzuweisungsserver (14) sendet, um bei dem Auswählen des Chatservers (18a, 18b, 18c) verwendet zu werden, jedes Mal, wenn das Messergebnis erhalten wird.

9. Chatserver (18) zum Weitergeben von Aussagedaten, die unter Client-Endgeräten (10a, 10b, 10c) übertragen werden, zwischen einer Vielzahl von Chatservern (18a, 18b, 18c), die in einem Chatsystem (1) in einer verteilten Weise angeordnet sind, in dem eine Vielzahl von Mitgliedern, die jeweils einem Chatraum beigetreten sind, über ein Netzwerk unter Verwendung von Client-Endgeräten (10a, 10b, 10c) Gespräche miteinander führen, umfassend:

einen Chatraumöffnungsabschnitt (92), der einen Chatraum als Reaktion auf eine Anforderung von einem Relaispunktzuweisungsserver (14), der sich von der Vielzahl von Chatservern (18a, 18b, 18c) unterscheidet, öffnet und einen Chatserver auf einer Grundlage von zuvor bestimmten Regeln als Reaktion auf eine Öffnungsanforderung, den Chatraum zu öffnen, die durch ein beliebiges der Client-Endgeräte erteilt wird, auswählt, wobei das Öffnen es Mitgliedern über die Client-Endgeräte (10a, 10b, 10c) ermöglicht, Aussagedaten in dem Chatraum weiterzugeben, wobei der Chatserver (18a, 18b, 18c) auf der Grundlage von zuvor bestimmten Regeln ausgewählt wird, einschließlich mindestens einer beliebigen von Positionsbeziehungen zwischen den Client-Endgeräten (10a, 10b, 10c) und Regionen, in denen die Chatserver (18a, 18b, 18c) vorhanden sind, und Kommunikationsgeschwindigkeiten zwischen den Client-Endgeräten (10a, 10b, 10c) und den Chatservern (18a, 18b, 18c); und einen Chatverarbeitungsabschnitt (94), der eine Anforderung, dem Chatraum beizutreten, akzeptiert, die von jedem der Client-Endgeräte (10a, 10b, 10c) von dem Relaispunktzuweisungsserver (14) erteilt wird, und eine direkte Kommunikation mit den Client-Endgeräten (10a, 10b, 10c) herstellt, die zuvor bestimmte Bedingungen erfüllt haben, wobei dadurch die Aussagedaten weitergegeben werden.

10. Chatraumerstellungsverfahren in einem Chatsystem (1), in dem eine Vielzahl von Mitgliedern, die jeweils einem Chatraum beigetreten sind, über ein Netzwerk unter Verwendung von Client-Endgeräten (10a, 10b, 10c) Gespräche miteinander führen, umfassend:

einen Schritt eines Erteilens einer Öffnungsanforderung, den Chatraum zu öffnen, von einem beliebigen der Client-Endgeräte (10a, 10b, 10c), wobei das Öffnen es Mitgliedern über die Client-Endgeräte (10a, 10b, 10c) ermöglicht, Aussagedaten in dem Chatraum weiterzugeben; einen Schritt eines Anforderns, von einem Relaispunktzuweisungsserver (14), eines Chatservers (18a, 18b, 18c), Aussagedaten in dem Chatraum entsprechend der Öffnungsanforderung weiterzugeben, der auf einer Grundlage von zuvor bestimmten Regeln aus einer Vielzahl von Chatservern (18a, 18b, 18c) als Reaktion auf die Öffnungsanforderung ausgewählt wird, die in einer verteilten Weise außerhalb des Relaispunktzuweisungsservers (14) angeordnet sind und Aussagedaten, die zwischen den Client-Endgeräten (10a, 10b, 10c) übertragen werden, weitergeben, wobei der Chatserver (18a, 18b, 18c) auf der Grundlage von zuvor bestimmten Regeln ausgewählt wird, einschließlich mindestens einer beliebigen von Positionsbeziehungen zwischen den Client-Endgeräten (10a, 10b, 10c) und Regionen, in denen die Chatserver (18a, 18b, 18c) vorhanden sind, und Kommunikationsgeschwindigkeiten zwischen den Client-Endgeräten (10a, 10b, 10c) und den Chatservern (18a, 18b, 18c); und

ein Schritt des Öffnens des Chatraums durch den ausgewählten Chatserver (18a, 18b, 18c) und des Herstellens der direkten Kommunikation mit den Client-Endgeräten (10a, 10b, 10c), wobei dadurch die Aussagedaten weitergegeben werden.

11. Computerprogramm zum Aktivieren eines Relaispunktzuweisungsservers (14) in einem Chatsystem (1), in dem eine Vielzahl von Mitgliedern, die jeweils einem Chatraum beigetreten sind, über ein Netzwerk unter Verwendung von Client-Endgeräten (10a, 10b, 10c) Gespräche miteinander führen, um durchzuführen:

eine Funktion, um eine Öffnungsanforderung, den Chatraum zu öffnen, von einem beliebigen der Client-Endgeräte (10a, 10b, 10c) zu erfassen, wobei das Öffnen es Mitgliedern über die Client-Endgeräte (10a, 10b, 10c) ermöglicht, Aussagedaten in dem Chatraum weiterzugeben; und eine Funktion, um einen Chatserver (18a, 18b, 18c) anzufordern, Aussagedaten in dem Chatraum entsprechend der Öffnungsanforderung weiterzugeben, der auf einer Grundlage von zuvor bestimmten Regeln aus einer Vielzahl von Chatservern (18a, 18b, 18c) als Reaktion auf die Öffnungsanforderung ausgewählt wird, die in einer verteilten Weise außerhalb des Relaispunktzuweisungsservers (14) angeordnet sind und Aussagedaten, die zwischen den Client-Endgeräten (10a, 10b, 10c) übertragen werden, weitergeben, wobei der Chatserver (18a, 18b, 18c) auf der Grundlage von zuvor bestimmten Regeln ausgewählt wird, einschließlich mindestens einer beliebigen von Positionsbeziehungen zwischen den Client-Endgeräten (10a, 10b, 10c) und Regionen, in denen die Chatserver (18a, 18b, 18c) vorhanden sind, und Kommunikationsgeschwindigkeiten zwischen den Client-Endgeräten (10a, 10b, 10c) und den Chatservern (18a, 18b, 18c).

## Revendications

1. Serveur d'attribution de point de relais (14) dans un système de dialogue en ligne dans lequel une pluralité de membres qui ont chacun rejoint un espace de dialogue en ligne ont des conversations les uns avec les autres par l'intermédiaire d'un réseau à l'aide de terminaux clients (10a, 10b, 10c), comprenant :

une section de communication (72) acquérant une demande d'ouverture pour ouvrir l'espace de dialogue en ligne à partir de l'un quelconque des terminaux clients (10a, 10b, 10c), l'ouverture permettant aux membres, par l'intermédiaire des terminaux clients (10a, 10b, 10c), de relayer des données de déclaration dans l'espace de dialogue en ligne ; et
une section de sélection de serveur de dialogue en ligne (78) demandant à un serveur de dialogue en ligne (18a, 18b, 18c) sélectionné sur une base de règles prédéterminées parmi une pluralité de serveurs de dialogue en ligne (18a, 18b, 18c) disposés de manière distribuée en dehors du serveur d'attribution de point de relais (14) et relayant des données de déclaration transmises entre les terminaux clients en réponse à la demande d'ouverture, de relayer des données de déclaration dans l'espace de dialogue en ligne correspondant à la demande d'ouverture, dans lequel la section de sélection de serveur de dialogue en ligne (78) sélectionne le serveur de dialogue en ligne (18a, 18b, 18c) sur la base de règles prédéterminées comportant au moins l'une quelconque des relations de position parmi les terminaux clients (10a, 10b, 10c) et les régions dans lesquelles les serveurs de dialogue en ligne (18a, 18b, 18c) sont présents et les vitesses de communication entre les terminaux clients (10a, 10b, 10c) et les serveurs de dialogue en ligne (18a, 18b, 18c).

2. Serveur d'attribution de point de relais (14) selon la revendication 1, dans lequel la section de sélection de serveur de dialogue en ligne (78) recueille continuellement des paramètres comme une base de sélection du serveur de dialogue en ligne (18a, 18b, 18c), et sélectionne le serveur de dialogue en ligne (18a, 18b, 18c) en fonction des paramètres au moment où la demande d'ouverture est émise.

3. Serveur d'attribution de point de relais (14) selon la revendication 1 ou 2, dans lequel la section de sélection de serveur de dialogue en ligne (78) sélectionne le serveur de dialogue en ligne (18a, 18b, 18c) sur une base des vitesses de communication moyennes entre les terminaux clients (10a, 10b, 10c) utilisés par les membres qui vont rejoindre l'espace de dialogue en ligne et les serveurs de dialogue en ligne (18a, 18b, 18c) au moment où la demande d'ouverture pour ouvrir l'espace de dialogue en ligne est émise.

4. Serveur d'attribution de point de relais (14) selon la revendication 1, dans lequel la section de sélection de serveur de dialogue en ligne (78) acquiert une région correspondant aux informations de position du terminal client (10a, 10b, 10c) qui a émis la demande d'ouverture pour ouvrir l'espace de dialogue en ligne, et sélectionne le serveur de dialogue en ligne (18a, 18b, 18c) qui est présent dans la région.

5. Serveur d'attribution de point de relais (14) selon l'une quelconque des revendications 1 à 4, comprenant en outre :

une section de stockage d'informations de dialogue en ligne (84) stockant des informations d'identification de l'espace de dialogue en ligne créé par le serveur de dialogue en ligne (18a, 18b, 18c) en réponse à la demande consistant à relayer les données de déclaration et les informations d'identification du serveur de dialogue en ligne (18a, 18b, 18c) en association l'une avec l'autre ; et
une section de gestion de dialogue en ligne (82) acquérant un signal de demande d'établissement de communication provenant du terminal client (10a, 10b, 10c) au serveur de dialogue en ligne (18a, 18b, 18c) et transférant le signal de demande au serveur de dialogue en ligne (18a, 18b, 18c) sur une base des informations d'identification de l'espace de dialogue en ligne.

6. Système de dialogue en ligne (1) dans lequel une pluralité de membres qui ont chacun rejoint un espace de dialogue en ligne ont des conversations les uns avec les autres par l'intermédiaire d'un réseau, comprenant :

une pluralité de terminaux clients (10a, 10b, 10c) sortant des données de déclaration des membres vers le réseau, acquérant des données de déclaration d'autres membres à partir du réseau, et sortant les données de déclaration acquises vers un dispositif de sortie ;
une pluralité de serveurs de dialogue en ligne (18a, 18b, 18c) disposés de manière distribuée et relayant les données de déclaration transmises entre les terminaux clients ; et
un serveur d'attribution de point de relais (14) différent des serveurs de dialogue en ligne (18a, 18b, 18c) et configuré pour recevoir une demande d'ouverture, dans lequel l'ouverture permettant aux membres par l'intermédiaire des terminaux clients (10a, 10b, 10c) de relayer des données de déclaration dans l'espace de dialogue en ligne, le serveur d'attribution de point de relais (14) en réponse à une demande d'ouverture pour ouvrir l'espace de dialogue en ligne provenant de l'un quelconque des terminaux clients (10a, 10b, 10c) et demandant à un serveur de dialogue en ligne (18a, 18b, 18c) sélectionné sur une base de règles prédéterminées parmi la pluralité de serveurs de dialogue en ligne (18a, 18b, 18c) de relayer les données de déclaration dans l'espace de dialogue en ligne correspondant à la demande d'ouverture, dans lequel le serveur de dialogue en ligne (18a, 18b, 18c) est sélectionné sur la base de règles prédéterminées comportant au moins une relation de position quelconque parmi les terminaux clients (10a, 10b, 10c) et les régions dans lesquelles les serveurs de dialogue en ligne (18a, 18b, 18c) sont présents et les vitesses de communication entre les terminaux clients (10a, 10b, 10c) et les serveurs de dialogue en ligne (18a, 18b, 18c).

7. Terminal client (10) destiné à être utilisé dans un système de dialogue en ligne (1) dans lequel une pluralité de membres ayant chacun rejoint un espace de dialogue en ligne ont des conversations les uns avec les autres par l'intermédiaire d'un réseau, comprenant :

une section d'acquisition d'informations d'entrée (42) acquérant des déclarations des membres qui utilisent des terminaux clients (10a, 10b, 10c) ;
une section de communication (50) envoyant et recevant des données de déclaration en établissant une communication avec un serveur de dialogue en ligne sélectionné sur une base de règles prédéterminées parmi une pluralité de serveurs de dialogue en ligne (18a, 18b, 18c) relayant les données de déclaration transmises entre les terminaux clients (101, 10b, 10c), dans lequel le serveur de dialogue en ligne (18a, 18b, 18c) est sélectionné sur la base de règles prédéterminées comportant au moins une relation de position quelconque parmi les terminaux clients (10a, 10b, 10c) et les régions dans lesquelles les serveurs de dialogue en ligne (18a, 18b, 18c) sont présents et les vitesses de communication entre les terminaux clients (10a, 10b, 10c) et les serveurs de dialogue en ligne (18a, 18b, 18c) ; et
une section de sortie (46) sortant successivement les données de déclaration des membres dans un format prédéterminé vers un dispositif de sortie,
dans lequel la section de communication (50) répond à une demande d'ouverture de dialogue en ligne acquise par la section d'acquisition d'informations d'entrée (42), émet une demande d'ouverture pour ouvrir un espace de dialogue en ligne à un serveur d'attribution de point de relais (14) différent des serveurs de dialogue en ligne (18a, 18b, 18c) pour sélectionner le serveur de dialogue en ligne (18a, 18b, 18c), dans lequel l'ouverture permettant aux membres par l'intermédiaire des terminaux clients (10a, 10b, 10c) de relayer des données de déclaration dans l'espace de dialogue en ligne, et établit la communication avec le serveur de dialogue en ligne (18a, 18b, 18c) sélectionné sur une base d'informations envoyées par le serveur d'attribution de point de relais (14) à la suite de la demande d'ouverture.

8. Terminal client selon (10) la revendication 7, dans lequel
la section de communication (50) comporte une section de mesure de vitesse mesurant en continu les vitesses de communication avec la pluralité de serveurs de dialogue en ligne, et envoyant un résultat mesuré au serveur d'attribution de point de relais (14) afin qu'il soit utilisé dans la sélection du serveur de dialogue en ligne (18a, 18b, 18c) à chaque fois que le résultat mesuré est obtenu.

9. Serveur de dialogue en ligne (18) destiné à relayer des données de déclaration transmises entre des terminaux clients (10a, 10b, 10c), parmi une pluralité de serveurs de dialogue en ligne (18a, 18b, 18c) disposés de manière distribuée dans un système de dialogue en ligne (1) dans lequel une pluralité de membres qui ont chacun rejoint un espace de dialogue en ligne ont des conversations les uns avec les autres par l'intermédiaire d'un réseau à l'aide des terminaux clients (10a, 10b, 10c), comprenant :

une section d'ouverture d'espace de dialogue en ligne (92) ouvrant un espace de dialogue en ligne en réponse à une demande provenant d'un serveur d'attribution de point de relais (14) différent de la pluralité de serveurs de dialogue en ligne (18a, 18b, 18c) et sélectionnant un serveur de dialogue en ligne sur une base de règles prédéterminées en réponse à une demande d'ouverture pour ouvrir l'espace de dialogue en ligne qui est émise par l'un quelconque des terminaux clients, dans lequel l'ouverture permet aux membres, par l'intermédiaire des terminaux clients (10a, 10b, 10c), de relayer des données de déclaration dans l'espace de dialogue en ligne, dans lequel le serveur de dialogue en ligne (18a, 18b, 18c) est sélectionné sur la base de règles prédéterminées comportant au moins une relation de position quelconque parmi les terminaux clients (10a, 10b, 10c) et les régions dans lesquelles les serveurs de dialogue en ligne (18a, 18b, 18c) sont présents et les vitesses de communication entre les terminaux clients (10a, 10b, 10c) et les serveurs de dialogue en ligne (18a, 18b, 18c) ; et
une section de traitement de dialogue en ligne (94) acceptant une demande pour rejoindre l'espace de dialogue en ligne qui est émise par chacun des terminaux clients (10a, 10b, 10c) à partir du serveur d'attribution de point de relais (14), et établissant une communication directe avec les terminaux clients (10a, 10b, 10c) qui ont satisfait à des conditions prédéterminées, relayant ainsi les données de déclaration.

10. Procédé de construction d'un espace de dialogue en ligne dans un système de dialogue en ligne (1) dans lequel une pluralité de membres qui ont chacun rejoint un espace de dialogue en ligne ont des conversations les uns avec les autres par l'intermédiaire d'un réseau à l'aide de terminaux clients (10a, 10b, 10c), comprenant :

une étape consistant à émettre une demande d'ouverture pour ouvrir l'espace de dialogue en ligne à partir de l'un quelconque des terminaux clients (10a, 10b, 10c), dans lequel l'ouverture permet aux membres, par l'intermédiaire des terminaux clients (10a, 10b, 10c), de relayer des données de déclaration dans l'espace de dialogue en ligne ;
une étape consistant à demander, à partir d'un serveur d'attribution de point de relais (14), à un serveur de dialogue en ligne (18a, 18b, 18c) sélectionné sur une base de règles prédéterminées parmi une pluralité de serveurs de dialogue en ligne (18a, 18b, 18c) disposés de manière distribuée en dehors du serveur d'attribution de point de relais (14) et relayant des données de déclaration transmises parmi les terminaux clients (10a, 10b, 10c) en réponse à la demande d'ouverture, de relayer les données de déclaration dans l'espace de dialogue en ligne correspondant à la demande d'ouverture, dans lequel le serveur de dialogue en ligne (18a, 18b, 18c) est sélectionné sur la base de règles prédéterminées comportant au moins l'une quelconque des relations de position parmi les terminaux clients (10a, 10b, 10c) et les régions dans lesquelles les serveurs de dialogue en ligne (18a, 18b, 18c) sont présents et les vitesses de communication entre les terminaux clients (10a, 10b, 10c) et les serveurs de dialogue en ligne (18a, 18b, 18c) ; et
une étape consistant à ouvrir l'espace de dialogue en ligne par le serveur de dialogue en ligne (18a, 18b, 18c) sélectionné et à établir une communication directe avec les terminaux clients (10a, 10b, 10c), relayant ainsi les données de déclaration.

11. Programme informatique permettant à un serveur d'attribution de point de relais (14) dans un système de dialogue en ligne (1) dans lequel une pluralité de membres ayant chacun rejoint un espace de dialogue en ligne ont des conversations les uns avec les autres par l'intermédiaire d'un réseau à l'aide de terminaux clients (10a, 10b, 10c), de réaliser :
une fonction pour acquérir une demande d'ouverture pour ouvrir l'espace de dialogue en ligne à partir de l'un quelconque des terminaux clients (10a, 10b, 10c), dans lequel l'ouverture permet aux membres, par l'intermédiaire des terminaux clients (10a, 10b, 10c), de relayer des données de déclaration dans l'espace de dialogue en ligne ; et une fonction pour demander à un serveur de dialogue en ligne (18a, 18b, 18c) sélectionné sur une base de règles prédéterminées parmi une pluralité de serveurs de dialogue en ligne (18a, 18b, 18c) disposés de manière distribuée à l'extérieur du serveur d'attribution de point de relais (14) et relayant des données de déclaration transmises entre les terminaux clients (10a, 10b, 10c) en réponse à la demande d'ouverture, de relayer des données de déclaration dans l'espace de dialogue en ligne correspondant à la demande d'ouverture, dans lequel le serveur de dialogue en ligne (18a, 18b, 18c) est sélectionné sur la base de règles prédéterminées comportant au moins une relation de position quelconque parmi les terminaux clients (10a, 10b, 10c) et les régions dans lesquelles les serveurs de dialogue en ligne (18a, 18b, 18c) sont présents et les vitesses de communication entre les terminaux clients (10a, 10b, 10c) et les serveurs de dialogue en ligne (18a, 18b, 18c).

# FIG.1

200a

CLIENT TERMINAL

200b

CLIENT TERMINAL

200c

CLIENT TERMINAL

200d

CLIENT TERMINAL

# FIG.2

18b

CHAT SERVER

16a

LOAD BALANCER

16b

LOAD BALANCER

B

A

18a

CHAT SERVER

CHAT SERVER

18c

RELAY POINT ALLOCATION SERVER ～14

GATEWAY ～12

CLIENT TERMINAL

CLIENT TERMINAL

CLIENT TERMINAL

10a

10b     1

10c

F I G . 3

CPU 23

GPU 24

MAIN MEMORY 26

28

30

INPUT/OUTPUT INTERFACE

COMMUNICATION UNIT 32

STORAGE UNIT 34

OUTPUT UNIT 36

INPUT UNIT 38

RECORDING MEDIUM DRIVE 40

10

22

# F I G . 4

10

CLIENT TERMINAL

INPUT DEVICE →

42 — INPUT INFORMATION ACQUIRING SECTION

CHAT INFORMATION STORAGE SECTION — 48

44 — CHAT PROCESSING SECTION

46 — OUTPUT SECTION

COMMUNICATION SECTION — 50

OUTPUT DEVICE ←

CHAT SERVER 30    GATEWAY 12

# F I G . 5

12

GATEWAY

72 — CLIENT TERMINAL 10

COMMUNICATION SECTION

POSITIONAL INFORMATION ACQUIRING SECTION — 74

14

RELAY POINT ALLOCATION SERVER

LOAD BALANCER 16
CHAT SERVER 30

76 — COMMUNICATION SECTION

78 — CHAT SERVER SELECTING SECTION

CHAT MANAGING SECTION — 82

80 — SELECTION RULE STORAGE SECTION

CHAT INFORMATION STORAGE SECTION — 84

# FIG.6

90 — 18

CLIENT TERMINAL 10 ←→

RELAY POINT
ALLOCATION SERVER 14 ←→

LOAD BALANCER 16 ←→

CHAT SERVER

COMMUNICATION
SECTION

CHAT ROOM
OPENING SECTION — 92

CHAT PROCESSING
SECTION — 94

CHAT
INFORMATION
STORAGE SECTION — 96

# FIG.7

CLIENT TERMINAL 10a | GATEWAY 12 | RELAY POINT ALLOCATION SERVER 14 | LOAD BALANCER 16a | CHAT SERVER 18a | CLIENT TERMINAL 10b

CHAT START REQUEST ACCEPTED (S8)

ACCESS AUTHORITY ACQUIRED (S10)

CHAT ROOM OPENING REQUEST (S12)

CHAT ROOM OPENING REQUEST (S14)

REGIONAL INFORMATION

CHAT SERVER SELECTED (S16)

CHAT ROOM OPENING REQUEST (S18)

CHAT ROOM OPENING REQUEST (S20)

RESULT RETURNED (S22)

RESULT RETURNED (S24)

ROOM ID TOKEN SERVER IP

RESULT RETURNED (S26)

RESULT RETURNED (S28)

ROOM ID TOKEN

ROOM ID TOKEN

ROOM ID TOKEN SERVER IP

EP 3 923 147 B1

# FIG.8

CLIENT TERMINAL 10a | GATEWAY 12 | RELAY POINT ALLOCATION SERVER 14 | LOAD BALANCER 16a | CHAT SERVER 18a | CLIENT TERMINAL 10b

JOINING REQUESTED (S30)
ROOM ID TOKEN

JOINING REQUESTED (S32)
ROOM ID TOKEN

JOINING REQUESTED (S34)
ROOM ID TOKEN

CHECKED AND REGISTERED (S35)

PEER ID SENT (S36)

PEER ID SENT (S38)

PEER ID SENT (S40)

SPD SENT (S42)

SPD SENT (S44)
ROOM ID PEER ID

SPD SENT (S46)
ROOM ID PEER ID

SPD SENT (S48)

SPD SENT (S52)  SPD SENT (S50)

COMMUNICATION ESTABLISHED (S54)

# FIG.9

CLIENT TERMINAL 10a | GATEWAY 12 | RELAY POINT ALLOCATION SERVER 14 | CHAT SERVER 18a | CLIENT TERMINAL 10b

COMPANION SELECTION ACCEPTED

SESSION MANAGER

INVITATION NOTIFICATION (S58)
ROOM ID TOKEN

NOTIFICATION (S60)
ROOM ID TOKEN

JOINING ACTION ACCEPTED (S62)

JOINING REQUESTED (S64)
ROOM ID TOKEN

JOINING REQUESTED (S66)
ROOM ID TOKEN

JOINING REQUESTED (S68)
ROOM ID TOKEN

PEER ID SENT (S72)  PEER ID SENT (S70)

PEER ID SENT (S74)

COMMUNICATION ESTABLISHED (S76)

25

# FIG.10

102            104

| TERMINAL REGION | SERVER REGION |
|---|---|
| 0001 | A |
| 0002 | B |
| 0003 | C |
| . . . | . . . |

100

# FIG.11

112            114

| SERVER IP | ROOM ID |
|---|---|
| 100.100.100.111 | 01, 03, 08 |
| 100.100.100.222 | 02, 04 |
| 100.111.222.111 | 07, 09, 12 |
| . . . | . . . |

110

26

## FIG.12

| ROOM ID | TOKEN | PEER ID |
|---------|-------|---------|
| 01 | 2A | 01aa, 02ac, 00cv, 04ka, 02pp |
| 02 | 3T | 04dl, 07cp, 09ho, |
| 03 | 4C | 01ut, 08oe, 03gq, 08un, 02cy, 09cu |
| . . . | . . . | . . . |

122   124   126

120

## FIG.13

27

# FIG.14

10a

CLIENT TERMINAL

INPUT DEVICE → INPUT INFORMATION ACQUIRING SECTION

42

CHAT INFORMATION STORAGE SECTION — 48

44 — CHAT PROCESSING SECTION

COMMUNICATION SECTION — 50a

SPEED MEASURING SECTION — 51

46

OUTPUT SECTION

OUTPUT DEVICE ←

CHAT SERVER 30    GATEWAY 12

# FIG.15

CLIENT TERMINAL 10a          RELAY POINT ALLOCATION SERVER 14          CLIENT TERMINAL 10b

COMMUNICATION SPEED MEASURED PER SERVER  S80a

COMMUNICATION SPEED MEASURED PER SERVER  S80b

SPEED DATA SENT (S82a)    SPEED DATA SENT (S82b)

CHAT ROOM OPENING REQUEST (S84)

CHAT COMPANION INFORMATION

AVERAGE COMMUNICATION SPEED CALCULATED PER SERVER  S86

HIGHEST-SPEED SERVER DETERMINED  S88

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5534469 B
- US 2010199340 A1
- US 2017250861 A1